# EUROPEAN PATENT APPLICATION

(11) **EP 1 693 257 A2**
(43) Date of publication of application: **23.08.2006**
(21) Application number: 06001226.7
(22) Date of filing: 20.01.2006
(51) Int. Cl.: B60R 22/03

(54) **Tongue presenter device and seat belt apparatus employing the same**

(30) Priority: 16.02.2005 JP 2005039251; 20.06.2005 JP 2005179006; 19.07.2005 JP 2005208297
(71) Applicant: TAKATA CORPORATION, Minato-ku, Tokyo 106-8510 (JP)
(72) Inventor: Sugiyama, Tadashi, Minato-ku Tokyo 106-8510 (JP); Kataoka, Masao, Minato-ku Tokyo 106-8510 (JP)
(74) Representative: Banzer, Hans-Jörg

(57) **Abstract**

In order to improve the ease of handling of a tongue (5) and the smoothness of taking of the tongue (5) and not to make an occupant to experience discomfort when a belt conveying member (20) is set to a tongue grasping position (B), as a motor (23) rotates when a belt conveying member (20) of a tongue presenter device (10) is in a tongue storage position (A), an externally threaded shaft (16) rotates so that a lever supporting member (17) moves in a direction toward the front of a vehicle. During this, since a guide pin (22) is in a horizontal portion (21a₁) of a guide slot (21 a), a lever (19) is kept its inclined posture so that the belt conveying member (20) moves forward with keeping its level lower than a seat surface (2a₁). As the belt pin (22) reaches a sloping portion (21a₂) of the guide slot (21 a), the lever (19) takes a standing posture and the belt conveying member (20) is set to a tongue grasping position (B) higher than the seat surface (2a₁).

## Description

The present invention relates to a technical field of a seat belt apparatus which is installed in a vehicle such as an automobile and is adapted to restrain an occupant with a seat belt thereof and, more particularly, to a technical field of a tongue presenter device for assisting the occupant to take a tongue which is supported by a seat belt and is adapted to be latched to a buckle fixed to a vehicle body and also relates to a technical field of a seat belt apparatus employing the same.

### Related Art

Vehicle seats in automobiles and the like have been equipped with seat belt apparatuses. In the event of an emergency such as a vehicle collision where a large deceleration acts on the vehicle, such a seat belt apparatus restraints an occupant with a seat belt thereof so as to prevent the occupant from jumping out of the seat, thereby protecting the occupant.

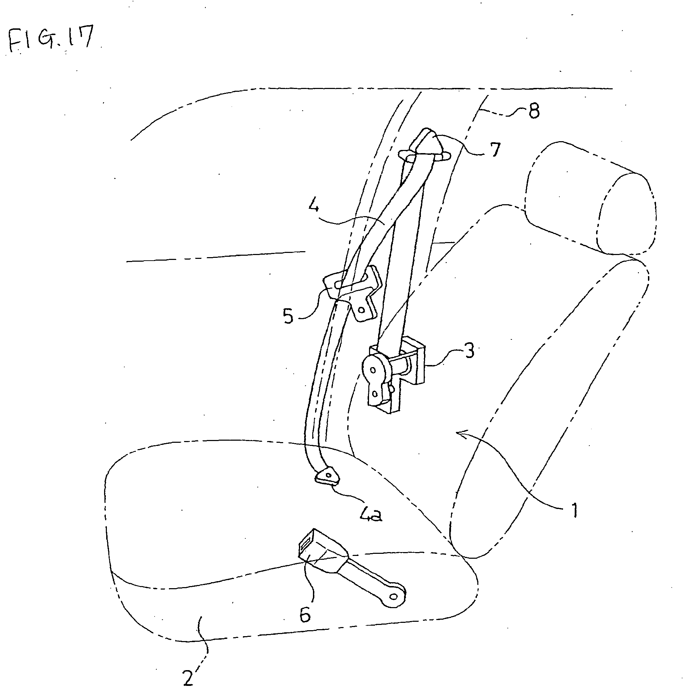

As an example of the seat belt apparatuses, a three-point type seat belt apparatus as shown in Fig. 17 is conventionally known. In Fig. 17, numeral 1 designates a seat belt apparatus provided for a vehicle seat 2, 3 designates a seat belt retractor which is fixed to a vehicle body near the vehicle seat 2 and which always biases a seat belt 4 in the winding direction with allowing the seat belt 4 to be withdrawn and, in the event of emergency, blocks the seat belt 4 from being withdrawn, 5 designates a tongue which is slidably supported by the seat belt 4, 6 designates a buckle which is positioned on a side of the vehicle seat 2 and is fixed to the vehicle seat 2 or a vehicle body and which is adapted to be latched with the tongue 5, and 7 designates a belt guide (deflection fitting) which is attached to an upper portion of the vehicle body such as a center pillar 8 and which is adapted to guide the seat belt 4 withdrawn from the seat belt retractor 3. The end of the seat belt 4 withdrawn from the seat belt retractor 3 is a belt anchoring portion 4a which is fixed to the vehicle seat 2 or the vehicle body.

When an occupant is about to wear the seat belt 4 of the seat belt apparatus 1 having the aforementioned structure, the occupant is seated in the vehicle seat 2, withdraws the seat belt 4 from the seat belt retractor 3, and latches the tongue 5 with the buckle 6. After that, the occupant releases his or her hand from the tongue 5 so that an excess withdrawn part of the seat belt 4 is wound up by the seat belt retractor 3, thereby canceling the slack of the seat belt 4. In this manner, the seat belt 4 is worn by the occupant.

By the way, in the seat belt apparatus 1, the seat belt 4 is retracted by the seat belt retractor 3 with no or little slack when the seat belt 4 is not used. Therefore, a portion of the seat belt 4 between the belt guide 7 attached to the center pillar 8 and the belt anchoring portion 4a of the seat belt 4 extends substantially along the center pillar 8. Accordingly, the tongue 5 supported by the seat belt 4 is located adjacent to the center pillar 8.

As the tongue 5 is located at the position mentioned above when the seat belt 4 is not used, however, the tongue 5 is located lateral to and posterior to the occupant who is seated in the vehicle seat 2. Accordingly, when the occupant seated in the vehicle seat 2 is about to take the tongue 5 for wearing the seat belt 4, the occupant should turn around to have precarious posture to take the tongue 5. That is, it is difficult to take the tongue 5. Therefore, there is a problem that handling of the tongue 5 for latching the tongue 5 with the buckle 6 is troublesome.

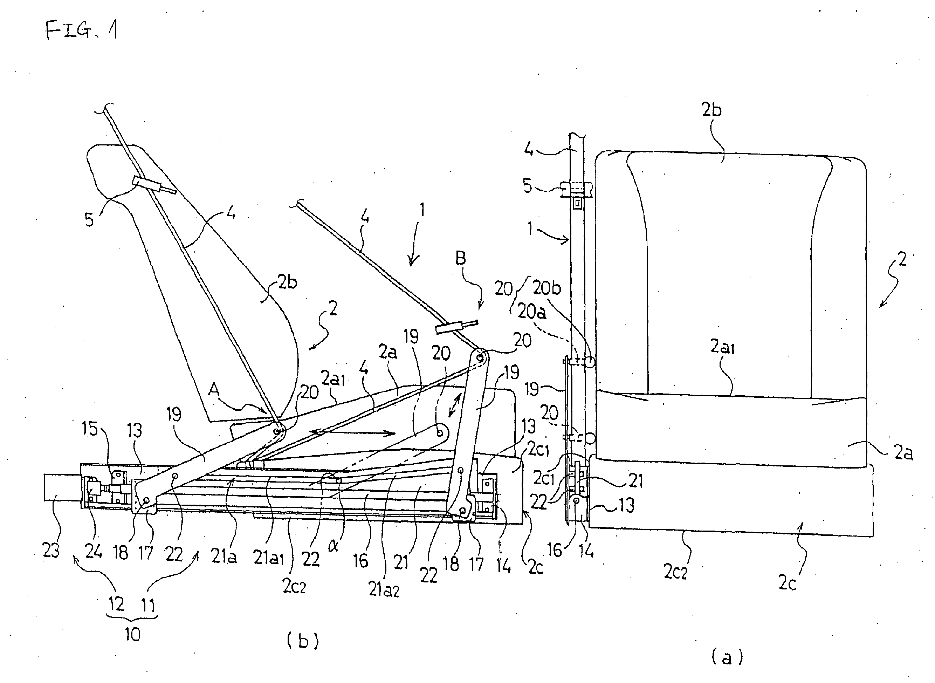

For this, a seat belt presenter has been proposed which facilitates an occupant, seated in a vehicle seat, taking a tongue, thereby achieving easy handling of the tongue for wearing a seat belt (see, for example, Japanese Unexamined Utility Model Specification No. S61-176047 (for example, claim 1 of the utility model claims, Fig. 1, and the like)).

The seat belt presenter disclosed in the Japanese Unexamined Utility Model Specification No. S61-176047 comprises a telescopic-type rod which can expand and contract, a belt hanger which is formed at the end of the rod and into which the webbing is loosely inserted, and a motor for moving the rod to expand and contract. As the occupant gets on the vehicle, closes the door, and turns on the ignition switch, the motor is activated so that the rod expands from the retracted position where the belt hanger is set in the storage position, whereby the belt hanger projects forward . Accordingly, a portion of the seat belt loosely inserted into the belt hanger and the tongue move forward and upward, whereby the tongue supported by the seat belt is set to a tongue taking position where the occupant easily reaches. When the occupant takes the tongue and inserts the tongue into the buckle for latching or when a predetermined time period elapses after the belt hanger is projected forward regardless of whether the occupant takes the tongue or not, the motor is reversely driven to contract the rod.

### Problems to be solved by the Invention

In the seat belt presenter disclosed in Japanese Unexamined Utility Model Specification No. S61-176047, however, the rod with the belt hanger being set in the storage position projects obliquely upward from the lower rear side of the occupant seated in the vehicle seat through the lateral side of or adjacent to the lumbar of the occupant. That is, as the occupant is seated in the vehicle seat, the belt hanger projects upward across the seat surface of the vehicle seat from the lateral side of or adjacent to the lumbar of the occupant so as to come closer to the occupant's eyes, so the occupant must experience discomfort.

Though the occupant must use his or her hand on the side near the belt hanger (i.e. his or her right hand when the belt hanger is provided on the right side of the vehicle seat, or his or her left hand when the belt hanger is provided on the left side of the vehicle seat) to grasp the seat belt or the tongue in the state that the telescopic type rod expands fully, the occupant hardly smoothly grasp the seat belt or the tongue because the expanding rod disturbs. Therefore, it is hardly said that the handling of the tongue when wearing the seat belt is necessarily easy.

The present invention was made under the aforementioned circumstances and an object of the present invention is to provide a tongue presenter device which provides improved ease of handling of a tongue and improved smoothness of taking of the tongue without making an occupant to experience discomfort when a belt guide is set to a tongue grasping position and without colliding with the occupant.

Another object of the present invention is to provide a seat belt apparatus which can provide easy handling of the tongue, latching the tongue with the buckle and smooth taking of the tongue, thereby facilitating the wearing of the seat belt.

### Means to solve the Problems

According to the invention, these objects are achieved by a tongue presenter device as defined in claim 1, a buckle device as defined in claims 15, and a seat belt apparatus as defined in claim 20. The dependent claims define preferred and advantageous embodiments of the invention.

To solve the aforementioned problems, a tongue presenter device of the invention is a tongue presenter device for conveying a seat belt, which slidably supports a tongue and can restrain an occupant, to a tongue grasping position, which is set in front of the occupant seated in a vehicle seat and on a side of said vehicle seat, and is characterized by comprising at least: a belt conveying member which can be in contact with said seat belt and conveys said seat belt, a moving means for moving the belt conveying member in an anteroposterior direction of the vehicle between a tongue storage position which is set on a side of a rear portion of said vehicle seat and said tongue grasping position, and a driving unit for actuating said moving means.

A tongue presenter device according to a first aspect of the invention is characterized in that said moving means moves said belt conveying member forward from said tongue storage position along a side surface of said vehicle seat with keeping its low level and sets said belt conveying member to a high level higher than said low level at a position which is a predetermined distance apart from said tongue storage position and is near said tongue grasping position.

Concerning the first aspect, said low level may be set lower than said seat surface of the vehicle seat and said high level may be higher than said seat surface of the vehicle seat.

Further, a tongue presenter device according to a second aspect of the invention is characterized in that said belt conveying member is normally set in a belt conveying position for conveying said seat belt, and when force in a direction from said tongue grasping position to said tongue storage position is applied to said belt conveying member, said belt conveying member is held at said belt conveying position, while when force exceeding a predetermined value other than the force in a direction from said tongue grasping position to said tongue storage position is applied to said belt conveying member, said belt conveying member pivots to escape from said belt conveying position.

Further, a tongue presenter device of the present invention may be characterized in that said moving means comprises an externally threaded shaft which is arranged in parallel with the side surface of said vehicle seat and in parallel with the bottom surface of said vehicle seat, a lever supporting member which screws together with said externally threaded shaft and is moved along the externally threaded shaft by rotation of said externally threaded shaft, a lever of which one end is pivotably connected to said lever supporting member and which is provided at the other end thereof with said belt conveying member and is provided at a middle portion thereof with a guide pin, and a guide member having a guide slot for guiding said guide pin, and that said guide slot comprises a horizontal portion which horizontally extends forward from a position corresponding to the tongue storage position of said belt conveying member, and a sloping portion which is continued to said horizontal portion at a position corresponding to said position near said tongue grasping position of said belt conveying member and extends obliquely upward toward a position corresponding to the belt grasping position of said belt conveying member.

Further, a tongue presenter device according to a third aspect of the invention is characterized in that said moving means comprises a pair of pulleys which are spaced apart from each other by a predetermined distance in the anteroposterior direction of said vehicle seat and an endless belt which is wound around the pulleys with tension, and that said belt conveying member is fixed to said endless belt by a fixture.

In addition concerning the third aspect, said moving means may comprise a guide member having a guide slot for guiding said belt conveying member and a friction reducing means arranged between said belt conveying member and said guide slot.

According to the third aspect, said friction reducing means may be a roller which is disposed on said belt conveying member such that the roller can roll along the guide slot or a resin coating provided at least either on a portion of said belt conveying member to be in contact with said guide slot or on the inner periphery of the guide slot of said guide member.

A tongue presenter device of the invention may be characterized in that said moving means is disposed on the side surface of said vehicle seat, inside of a seating portion of said vehicle seat, inside of a door on the side of said vehicle seat, on a vehicle floor on the side of said vehicle seat, or on a side sill on the side of said vehicle seat.

According to another embodiment according to the invention, the belt conveying member comprises a first conveying member and a second conveying member. In this embodiment the conveying member is adapted such that said first conveying member can pivot relative to said second conveying member between a belt conveying position where said belt conveying member takes a linear shape and an escaping position where said belt conveying member takes a bent shape. In this embodiment the structure of the tongue presenter device can be simplified.

A buckle device of the invention latches a tongue of a seat belt. The buckle device comprises a buckle, a moving means for moving the buckle between a storage position where the buckle is stored and a service position, and a driving means for actuating the moving means.

When the seat belt is not used, the buckle is set to the storage position. Therefore, similarly to the aforementioned tongue presenter device, the buckle does not disturb the occupant who does not wear the seat belt and is about to get on and off the vehicle, whereby the occupant can smoothly get on and off the vehicle.

A seat belt apparatus of the invention is a seat belt apparatus comprising at least said seat belt, a seat belt retractor which is mounted on a vehicle body and always biases said seat belt in the winding-up direction, a tongue, and a buckle of a buckle device which is located at a position on a side of a vehicle seat and to which said tongue is inserted and latched, and is characterized in that a tongue presenter device as described above is disposed at the opposite side of said vehicle seat from said buckle, and/or that said buckle device, which is the buckle device as described above, is attached to said vehicle seat or a vehicle body.

### Effects of the Invention

In the tongue presenter device according to the invention having the aforementioned structure, the belt conveying member moves straight forward without being deflected toward the vehicle seat while the belt conveying member conveys the seat belt forward. Therefore, the occupant should little notice the belt conveying member so that the occupant may not experience discomfort.

Especially in the tongue presenter device according to the first aspect of the invention, the belt conveying member first moves straight forward with keeping its level to the low level and then changes its level to the high level at a position near the tongue grasping position. Therefore, the occupant can easily grasp the seat belt or the tongue from the belt conveying member. This improves the ease of handling of the tongue and the smoothness of taking of the tongue by the occupant. In this regard, the belt conveying member is set to a level higher than the seat surface at the position near the tongue grasping position, thereby further improving the ease of handling of the tongue and the smoothness of taking the tongue.

Even when the belt conveying member is set to a level higher than the seat surface, the belt conveying member rises at a position near the occupant's knee where is relatively far from the occupant's eyes, i.e. near a front portion of the seating portion of the vehicle seat, the occupant is prevented from experiencing discomfort.

In addition, the belt conveying member is prevented from being deflected toward the vehicle seat during the tongue conveying member is set to the tongue grasping position, thereby preventing the belt conveying member from colliding with the occupant even when the belt conveying member is set to the level higher than the seat surface.

Further, a lever provided on the belt conveying member stands substantially upright at the position adjacent to the occupant's knee (at the front-side portion of the seating portion of the vehicle seat) so that the occupant can grasp the seat belt or the tongue without being disturbed by the lever. Therefore, the occupant can easily grasp the seat belt or the tongue with his or her hand that is located at the side where the tongue presenter device is disposed. This further improves the ease of handling of the tongue and the smoothness of taking of the tongue by the occupant.

Since the belt conveying member projects from the occupant side, the occupant may have difficulty in taking the seat belt off the belt conveying member when the occupant grasps the seat belt or the tongue for latching the tongue with the buckle in a state that the belt conveying member is set in the tongue grasping position. In the tongue presenter device according to the second aspect of the invention, however, the belt conveying member pivots to escape from the belt conveying position because upward force exceeding a predetermined value is applied to the belt conveying member when the occupant takes the seat belt off the belt conveying member. Accordingly, the occupant can easily take the seat belt off the belt conveying member.

When the occupant releases the seat belt without inserting the tongue into the buckle after taking the tongue off the belt conveying member in the state the belt conveying member is set in the tongue grasping position, the seat belt retractor winds up the seat belt similarly to the conventional one so that the seat belt and the tongue return to the tongue storage position. After a lapse of a predetermined period of time, the belt conveying member is about to return to the tongue storage position. However, the belt conveying member may collide with the seat belt already returned in the tongue storage position so that the belt conveying member is blocked from further returning. However, the belt conveying member can pivot to escape from the belt conveying position because force exceeding a predetermined value in a direction from the tongue storage position to the tongue grasping position is applied to the belt conveying member by the seat belt. Therefore, the belt conveying member can pass the seat belt so as to return to the tongue storage position. In this manner, the seat belt and the tongue are securely set to the tongue grasping position before the next time of the wear of the seat belt.

In the tongue presenter device according to the third aspect of the invention, the belt conveying member is moved by the endless belt which is wound around a pair of pulleys with tension. Since the endless belt is normally made of a flexible material such as rubber or resin, the occurrence of noise while the belt conveying member moves can be restrained. Especially, rollers may be used to move the belt conveying member, thereby reducing the rubbing noise between the belt conveying member and the supporting member or the guide member while the belt conveying member moves. Instead of the rollers, at least either the belt conveying member or the inner periphery of the guide slot may be coated with resin so as to reduce the aforementioned rubbing noise.

The seat belt apparatus of the invention can provide easy handling of the tongue and smooth taking of the tongue, thereby facilitating the wearing of the seat belt.

### Brief Explanation of the drawings

Figs. 1(a) and 1(b) schematically show entirely an embodiment of a tongue presenter device according to the present invention, wherein Fig. 1 (a) is an illustration thereof taken from the vehicle front side and Fig. 1(b) is an illustration thereof taken from the vehicle right side.
Fig. 2 is a block diagram schematically showing a control unit for driving a motor in the tongue presenter device of the embodiment shown in Figs. 1(a), 1(b).
Fig. 3 is a flow chart showing a control flow for driving the motor in the tongue presenter device of the embodiment shown in Figs. 1(a), 1(b).
Figs. 4(a), 4(b) schematically show a tongue storage position when the seat belt is not used, wherein Fig. 4(a) is a front view thereof and Fig. 4(b) is a partial view thereof taken from a direction IVB in Fig. 4(a).
Figs. 5(a) and 5(b) show another embodiment of the seat belt apparatus according to the present invention, wherein Fig. 5(a) is an illustration showing a state where a buckle is in the storage position and Fig. 5(b) is an illustration showing a state where the buckle is in the service position.
Figs. 6(a) and 6(b) show further another embodiment of the seat belt apparatus according to the present invention, wherein Fig. 6(a) is an illustration showing a state where a buckle is in the storage position and Fig. 6(b) is an illustration showing a state where the buckle is in the service position.
Figs. 7(a)-7(c) show still another embodiment of the seat belt apparatus according to the present invention, wherein Fig. 7(a) is an illustration schematically showing a state that a belt conveying member is in a tongue grasping position, Fig. 7(b) is an illustration schematically showing a state that the belt conveying member is in a tongue storage position and a door is opened, and Fig. 7(c) is an illustration schematically showing a state that the belt conveying member is in the tongue storage position and the door is closed.
Fig. 8 is an illustration schematically showing a part of another embodiment of the seat belt apparatus according to the present invention.
Fig. 9 is an illustration schematically showing another part of the seat belt apparatus of the embodiment shown in Fig. 8.
Fig. 10 is an illustration similar to Fig. 8, but schematically showing a part of another embodiment of the seat belt apparatus according to the present invention.
Figs. 11(a), 11(b) schematically show further another embodiment of the seat belt apparatus according to the present invention, wherein Fig. 11(a) is a perspective schematic view of the seat belt apparatus and Fig. 11(b) is a perspective schematic view of the tongue presenter device.
Figs. 12(a), 12(b) schematically show the tongue presenter device shown in Fig. 11(b), wherein Fig. 12(a) is a plan view thereof and Fig. 12(b) is a sectional view taken along a line XIIB-XIIB in Fig. 12(a).
Fig. 13 is a partially enlarged view showing an endless belt and a pulley used in the tongue presenter device shown in Fig. 11(b).
Fig. 14 is a sectional view taken along a line XIV-XIV in Fig. 12(a).
Figs. 15(a), 15(b) partially show a tongue presenter device of still further another embodiment of the seat belt apparatus according to the present invention, wherein Fig. 15(a) is a top view of a belt conveying member and Fig. 15(b) is an illustration showing the pivoted state of the belt conveying member.
Figs. 16(a), 16(b) show a belt conveying member of the embodiment shown in Figs. 15(a), 15(b), wherein Fig. 16(a) is an illustration showing that the belt conveying member is in the projecting position and Fig. 16(b) is an illustration showing that the belt conveying member is in the escaping position.
Fig. 17 is an illustration showing a conventional normal three-point type seat belt apparatus.

### Best Modes for carrying out the Invention

Hereinafter, best modes for carrying out the present invention will be described with reference to the attached drawings.

Figs. 1(a) and 1(b) schematically show entirely an embodiment of a tongue presenter device according to the present invention, wherein Fig. 1(a) is a front view thereof (taken from the vehicle front side) and Fig. 1(b) is a left side view thereof (taken from the vehicle right side). In the description of each following embodiment, same components as used in previous embodiment or the conventional example shown in Fig. 17 are marked with the same numerals so that the detailed description about these components will be omitted (it should be noted that numerals not shown in the drawing corresponding to the explanation are substituted by those shown in the other drawing.).

The tongue presenter device 10 of this embodiment is adapted to be used in a conventionally known three-point type seat belt apparatus 1 as shown in Fig. 17 mentioned above, that is, a seat belt apparatus 1 which comprises at least a seat belt retractor 3, a seat belt 4, a tongue 5, a buckle 6, and a belt guide 7 and which is appended to a vehicle seat 2.

As shown in Figs. 1(a) and 1(b), the tongue presenter device 10 of this embodiment is attached to a vehicle seat 2 on the right side of a vehicle body. The vehicle seat 2 comprises a seating portion 2a on which occupant's hips are seated, a seat back portion 2b against which the occupant's back rests, and a seat frame 2c which supports the seating portion 2a and which is adapted such that its position in the longitudinal direction of the vehicle body is adjustable and its height is adjustable relative to the vehicle floor.

The tongue presenter device 10 comprises a tongue conveying section (corresponding to the moving means of the present invention) 11 for conveying a portion, between the tongue 5 and a belt anchor 4a, of the seat belt between a tongue storage position A and a tongue grasping position B, and a driving section (corresponding to the driving unit of the present invention) 12 for actuating the tongue conveying section 11. The tongue conveying section 11 and the driving section 12 are both arranged in a supporting frame 13 fixed to a right side surface 2c₁ of the seat frame 2c of the vehicle seat 2.

The tongue conveying section 11 comprises a pair of front and rear supporting brackets 14 and 15 which are attached to the supporting frame 13 to be spaced apart from each other in the longitudinal direction, an externally threaded shaft 16 which is rotatably supported by the supporting brackets 14, 15 and extends in parallel with both the right side surface 2c₁ and a bottom surface 2c₂ of the seat frame 2c of the vehicle seat 2, a lever supporting member 17 which has an internal thread which can mesh with the external thread of the externally threaded shaft 16 and which is movable in the longitudinal direction along the externally threaded shaft 16 by the rotation of the externally threaded shaft 16, a lever 19 of which one end is pivotably supported on the lever supporting member 17 by a pivot pin 18, a belt conveying member 20 which is disposed at the other end of the lever 19 to project in the lateral direction of the vehicle body toward the vehicle seat 2 and which can come in contact with the seat belt 4 and conveys a portion of the seat belt 4 forward, a plate-like guide member 21 which is attached to the supporting frame 13 such that the guide member 21 is positioned between the supporting frame 13 and the lever 19 and which has a guide slot 21a, and a guide pin 22 which is loosely fitted into the guide slot 21 a and is guided by the guide slot 21a. Though the lever supporting member 17, the pivot pin 18, the lever 19, the belt conveying member 20, and the guide pin 22 are all shown double by solid lines in Fig. 1(b), these are shown double by solid lines for the purpose of making it clearly understandable that the belt conveying member 20 can be set to the two positions i.e. the tongue storage position A and the tongue grasping position B as will be described later, so it should be understood that these components 17, 18, 19, 20, 22 are actually provided singly.

The belt conveying member 20 comprises a shaft portion 20a which can come in contact with a flat surface of the seat belt 4 and a spherical flange 20b which is formed on the end of the shaft portion 20a and with which an edge of the seat belt 4 can be in contact. The portion of the seat belt 4 is conveyed forward by the shaft portion 20a while the both edges of the seat belt 4 are guided by the lever 19 and the flange 20b, respectively.

The guide slot 21 a of the guide member 21 comprises a horizontal portion 21 a₁ extending parallel to the bottom surface 2c₂ of the seat frame and a sloping portion 21a₂. The horizontal portion 21a₁ extends from the position of the guide pin 22 corresponding to the belt storage position A of the belt conveying member 20 to the position α of the guide pin 22 corresponding to the position (corresponding to the position near the tongue grasping position of the present invention) of the belt conveying member 20, shown by chain double-dashed lines in Fig. 1(b), on the right side of and adjacent to a knee of the occupant seated in the vehicle seat 2. The sloping portion 21a₂ extends forward and obliquely upward from the position α of the guide pin 22 to the position of the guide pin 22 corresponding to the belt grasping position B. The sloping portion 21a₂ is continued from the horizontal portion 21a₁ to have an angle relative to the horizontal portion 21a₁.

While the guide pin 22 linearly moves along the horizontal portion 21 a₁ of the guide slot 21 a in parallel with the bottom surface 2c₂ of the seat frame 2c, the belt conveying member 20 is always kept below a seat surface 2a₁, i.e. the upper surface of the seating portion 2a of the vehicle seat 2. While the guide pin 22 transfers to the sloping portion 21a₂ of the guide slot 21 a and moves along the sloping portion 21a₂, the lever 19 moves forward with pivoting about the pivot pin 18. When the guide pin 22 reaches the terminal end of the sloping portion 21a₂ corresponding to the tongue grasping position B of the belt conveying member 20, the belt conveying member 20 is positioned at a position adjacent to the right knee of the occupant seated in the vehicle seat 2 and higher than the seat surface 2a₁ of the seating portion 2a of the vehicle seat 2, that is, at the tongue grasping position B.

By the way, when there is no occupant in the vehicle seat 2, the guide pin 22 is positioned at a position being in contact with one end (the start point) of the horizontal portion 21 a₁ of the guide slot 21 a. In this state, the belt conveying member 20 is set to the tongue storage position A on the side of a rear portion of the vehicle seat 2. When the occupant is seated in the vehicle seat 2, the guide pin 22 is positioned at the position being in contact with the terminal end of the sloping portion 21a₂ of the guide slot 21a. In this state, the belt conveying member 20 is set to the tongue grasping position B higher than the seat surface 2a₁ of the vehicle seat 2 and adjacent to the knee of the occupant seated in the vehicle seat 2.

The driving section 12 is arranged in the supporting frame 13 and comprises a position setting motor (hereinafter, simply referred to the "motor") 23 for the belt conveying member 20 and a coupling 24 which connects an output rotary shaft of the motor 23 and the externally threaded shaft 16 so that the output rotary shaft and the externally threaded shaft 16 rotate together. As the motor 23 is driven to rotate in one direction and the externally threaded shaft 16 therefore rotates in the same direction, the lever supporting member 17 moves forward. As the motor 23 is driven to rotate in the direction opposite to the aforementioned one direction and the externally threaded shaft 16 therefore rotates in the same direction, the lever supporting member 17 moves backward. In this regard, a guide rail which is composed of a ridge or a groove extending in an anteroposterior direction may be arranged in the supporting frame 13, thereby stabilizing and ensuring the movement of the lever supporting member 17.

Description will now be made as regard to the driving control of the motor 23 of the driving section 12 for selectively setting the belt conveying member 20 to either of the tongue storage position A and the tongue grasping position B.

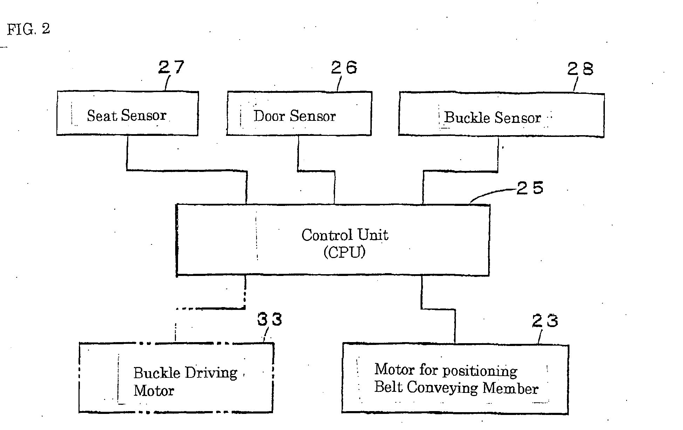

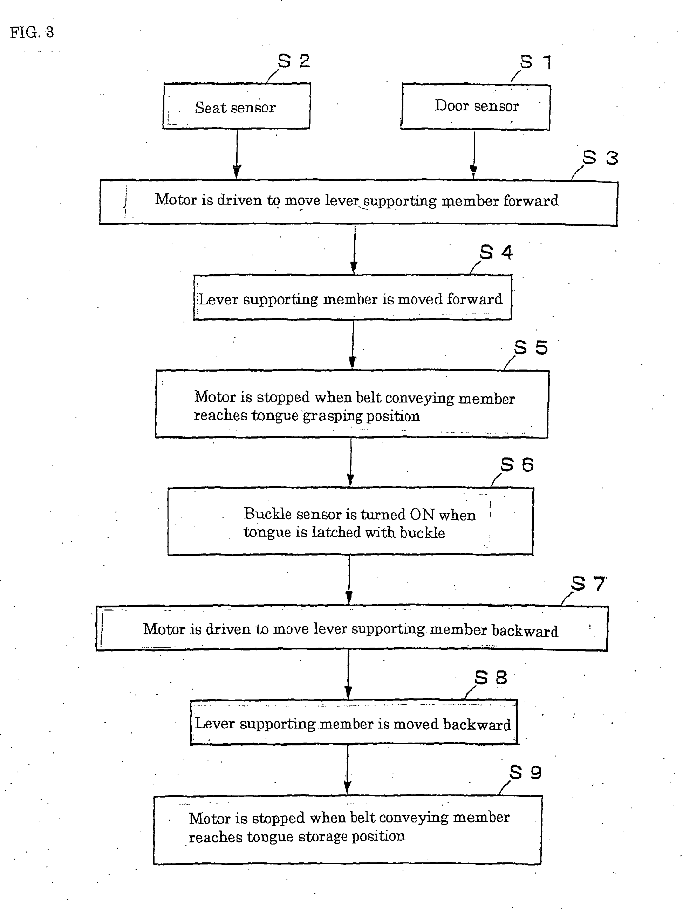

Signals, i.e. a door closure signal, indicating the door closure, from a door sensor 26, an occupancy signal, indicating that the occupant is seated in the vehicle seat 2, from a seat sensor 27, and a latch signal, indicating that the tongue 5 is inserted into the buckle 6, from a buckle sensor (or a buckle switch: hereinafter, referred to as a "buckle sensor") 28, are inputted into a control unit (central processing unit: CPU) 25 of the motor 23 as shown in Fig. 2. Based on the signals, the control unit 25 controls the drive of the motor 23 according to the flow chart shown in Fig. 3, whereby the belt conveying member 20 is automatically set to the tongue grasping position B or the tongue storage position A. In this case, the door sensor 26, the seat sensor 27, and the buckle sensor 28 may be conventionally known sensors, respectively.

The setting of the belt conveying member 20 to the respective positions A, B will be described specifically.

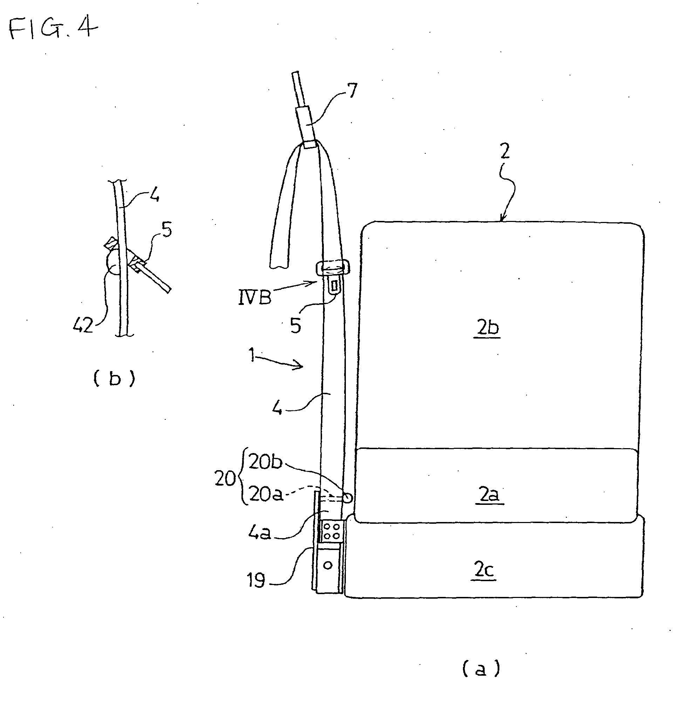

When there is no occupant in the vehicle seat 2 and the seat belt 4 is not used, the belt conveying member 20 is set to the tongue storage position A shown in Fig. 1(b). As shown in Fig. 1(b) and Fig. 4(a), the belt anchor 4a at the end of the seat belt 4 which is withdrawn from the seat belt retractor 3 and passes through the belt guide 7 is fixed to a mounting bracket 41 fixed to the seat frame 2c of the vehicle seat 2.

As clearly shown in Fig. 4(b), the seat belt 4 is provided with a tongue stopper 42 so that the tongue 5 slidably supported by the seat belt 4 is stopped from further moving toward the belt anchor 4a by the tongue stopper 42. In this state, the portion of the seat belt 4 between the tongue 5 and the belt anchor 4a is in contact with the front side of the shaft portion 20a of the belt conveying member 20. Therefore, the tongue presenter device 10 at the tongue storage position A and the seat belt 4 do not disturb the occupant who is about to get in the vehicle so as to allow smooth boarding of the occupant.

As the occupant get in the vehicle, sits on the seating portion 2a of the vehicle seat 2, and closes the door, the door sensor 26 outputs a door closure signal indicating that the door is closed and the seat sensor 27 outputs an occupancy signal indicating that the occupant sits on the seating portion 2a of the vehicle seat 2 (In this case, the door closure signal and the occupancy signal are outputted in any order. However, the following description will be made assuming that the door closure signal is outputted first in for the sake of convenience.).

As shown in Fig. 3, because the control unit 25 receives the door closure signal from the door sensor 26 in a step S 1 and the occupancy signal from the seat sensor 27 in a step S2, the control unit 25 controls the motor 23 to rotate to move the lever supporting member 17 toward the front of the vehicle in a step S3. By the drive of the motor 23, the lever supporting member 17 moves forward along the externally threaded shaft 16 in a step S4. During this, since the guide pin 22 of the lever 19 is guided by the horizontal portion 21a₁ of the guide slot 21a, the lever 19 moves forward with keeping the same inclined posture as it is at the tongue storage position A.

Accordingly, the belt conveying member 20 at the end of the lever 19 linearly moves forward in parallel with the bottom surface 2c₂ of the seat frame 2c without deflecting toward the vehicle seat 2 and with keeping its level lower than the seat surface 21a₁ of the seating portion 2a of the vehicle seat 2. By the forward movement of the belt conveying member 20, the seat belt 4 being in contact with the shaft portion 20a of the belt conveying member 20 is withdrawn from the seat belt retractor 3 and the portion of the seat belt 4 is conveyed forward according to the forward movement of the belt conveying member 20. During this, the belt conveying member 20 is kept its level lower than the seat surface 2a₁ of the seating portion 2a of the vehicle seat 2 and is not deflected toward the vehicle seat 2. Therefore, the occupant should little notice the belt conveying member 20 so that the occupant may not experience discomfort. However, the occupant naturally notices the seat belt 4 conveyed by the belt conveying member 20. In this case, since the seat belt 4 extends just forward along the right side of the vehicle seat 2 and does not come to the occupant, the occupant still may not experience discomfort.

As the guide pin 22 passes the position α at the angled point of the guide slot 21 a as shown by the chain double-dashed lines in Fig. 1(b), the guide pin 22 is guided to move by the sloping portion 21a₂ of the guide slot 21a, whereby the lever 19 pivots about the pivot pin 18 in the counter-clockwise direction while moving along the externally threaded shaft 16. Accordingly, the lever 19 gradually gets up to move the belt conveying member 20 upward so that the portion of the seat belt 4 being in contact with the shaft portion 20a is lifted up. As a result of this, the tongue 5 slidably supported by the seat belt 4 is moved upward.

As the guide pin 22 reaches the terminal end of the sloping portion 21a₂ of the guide slot 21a, the control unit 25 receives an ON signal from the limit switch not shown and stops the motor 23. At this point, the lever 19 takes a fully standing posture and the belt conveying member 20 is set to the tongue grasping position B higher than the seat surface 2a₁ of a front-side portion of the vehicle seat 2. Therefore, the portion of the seat belt 4 being in contact with the shaft portion 20a and the tongue 5 move upward to the position facilitating the grasping by the occupant. During the raising movement of the lever 19, the lever 19 is not deflected toward the occupant so that the belt conveying member 20 does not project toward the occupant. In addition, since the belt conveying member 20 rises at a position near the occupant's knee where is relatively far from the occupant's eyes, the occupant may not experience discomfort even when the belt conveying member 20 rises higher than the seat surface 2a₁.

As the seat belt 4 and the tongue 5 are set to the position facilitating the grasping by the occupant, the occupant can easily grasp the seat belt 4 or the tongue 5 from the belt conveying member 20. In this case, the lever 19 stands substantially upright at the position adjacent to the occupant's knee (at the front-side portion of the seating portion 2a) as shown in Fig. 1(b) so that the occupant can grasp the seat belt 4 or the tongue 5 without being disturbed by the lever 19. Therefore, the occupant can easily grasp the seat belt 4 or the tongue 5 with his or her right hand that is located at the side where the tongue presenter device 10 is disposed.

In a step S6, the occupant inserts the tongue 5 into the buckle 6 which is located on the left side of the vehicle seat 2, i.e. the opposite side of the vehicle seat 2 from the belt conveying member 20 to latch the buckle 6 with the tongue 5. Then, the buckle sensor 28 is turned ON so that the latch signal is inputted from the buckle sensor 28 to the control unit 25.

According to the latch signal from the buckle sensor 28, the control unit 25 controls the motor 23 to rotate in a direction moving the lever supporting member 17 toward the rear side of the vehicle in a step S7. By the rotation of the motor 23, the lever supporting member 17 moves backward along the externally threaded shaft 16 in a step S8. During this, since the guide pin 22 is guided by the sloping portion 21a₂ of the guide slot 21a, the lever 19 moves along the externally threaded shaft 16 with pivoting about the pivot pin 18 in the clockwise direction. Accordingly, the lever 19 gradually tilts so that the belt conveying member 20 moves downward to be lower than the seat surface 2a₁.

As the guide pin 22 reaches to the position α at the angled point of the guide slot 21a, the lever 19 becomes to the tilting state as its original state in which the lever 19 fully tilts as shown by the chain double-dashed lines in Fig. 1(b). After that, the guide pin 22 moves along the horizontal portion 21a₁ of the guide slot 21a so that the lever 19 moves backward with keeping its tilting state. In a step S9, the belt conveying member 20 becomes to the tongue storage position A as the original position as shown by the solid lines in Fig. 1(b). By an output signal form a limit switch (not shown) for detecting that the belt conveying member 20 is in the tongue storage position A, the control unit 25 stops the motor 23 in the step S9.

As the occupant releases the tongue 5 from the buckle 6 and releases his or her hand from the tongue 5 when the occupant is about to get off the vehicle, the seat belt 4 is wound up by the seat belt retractor 3 so that the portion of the seat belt 4 moves backward. As the retraction of the seat belt 4 by the seat belt retractor 3 is terminated, the tongue 5 comes in contact with the tongue stopper 42 and becomes the original position. The portion of the seat belt 4 between the tongue 5 and the belt anchor 4a comes in contact with the front side of the shaft portion 20a of the belt conveying member 20 and becomes into the original state for the seat belt when not used. Therefore, the tongue presenter device 10 in the tongue storage position A and the seat belt 4 do not disturb the occupant when getting off the vehicle so that the occupant can smoothly get off the vehicle. Since the seat belt 4 has flexibility so that it is relatively soft, the storage position of the seat belt 4 when not used may be varied and may be shifted so that the seat belt 4 may not be in contact with the shaft portion 20a of the belt conveying member 20 in the tongue storage position A. For this, a suitable means for maintaining the storage position of the seat belt 4 when not used is provided so that the storage position of the seat belt 4 becomes constant, but the means is not shown.

With the tongue presenter device 10 of this embodiment, the belt conveying member 20 moves forward straight with keeping its level lower than the seat surface 21 a₁ of the seating portion 2a of the vehicle seat 2 and without being deflected toward the vehicle seat 2 while the seat belt 4 is moved forward by the belt conveying member 20, whereby the occupant little notices the belt conveying member 20 so as to prevent the occupant from experiencing discomfort.

Since the belt conveying member 20 is set to be higher than the seat surface 2a₁ when the belt conveying member 20 is set in the tongue grasping position B, the occupant can easily grasp the seat belt 4 or the tongue 5 from the belt conveying member 20. In addition, since the lever 19 stands substantially upright at the position adjacent to the occupant's knee (at the front-side portion of the seating portion 2a), the lever 19 does not disturb the occupant during grasping the seat belt 4 or the tongue 5. Therefore, the occupant can easily grasp the seat belt 4 or the tongue 5 with his or her right hand that is located at the side where the tongue presenter device 10 is disposed. This further improves the ease of handling of the tongue 5 and the smoothness of taking of the tongue 5 by the occupant.

Even though the belt conveying member 20 is set higher than the seat surface 2a₁, the belt conveying member 20 rises at a position near the occupant's knee where is relatively far from the occupant's eyes, i.e. near the front end portion of the seating portion 2a of the vehicle seat 2, thereby preventing the occupant from experiencing discomfort.

In addition, the belt conveying member 20 is prevented from being deflected toward the vehicle seat 2 during the tongue conveying member 20 is set to the tongue grasping position B, thereby preventing the belt conveying member 20 from colliding with the occupant even when the belt conveying member 20 is set higher than the seat surface 2a₁.

With the seat belt apparatus 1 of this embodiment, the handling of the tongue is facilitated and the taking of the tongue is smoothed, thereby allowing the easy wearing of the seat belt 4.

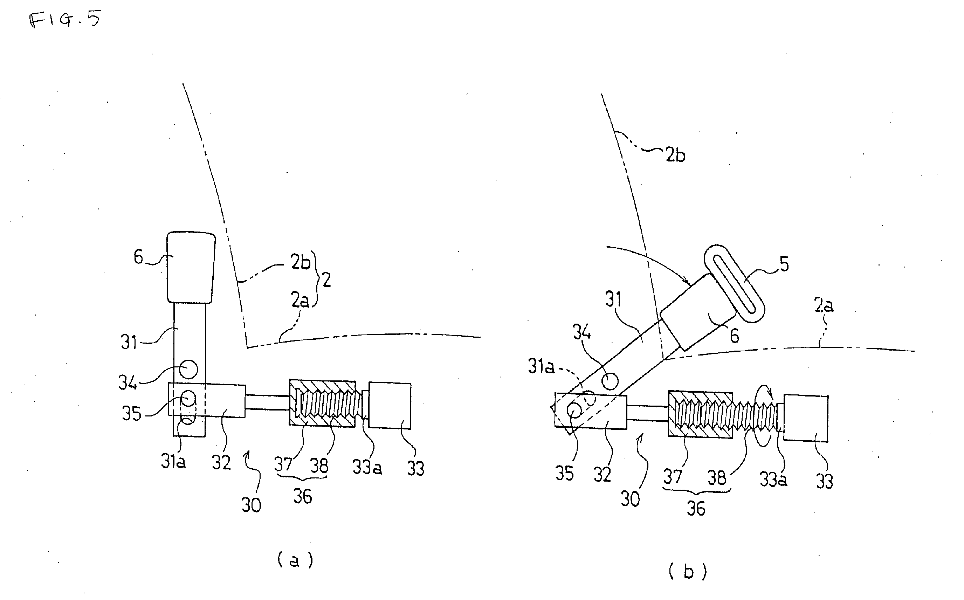

Figs. 5(a) and 5(b) show another embodiment of the seat belt apparatus according to the present invention, wherein Fig. 5(a) is an illustration showing a state where a buckle is in the storage position and Fig. 5(b) is an illustration showing a state where the buckle is in the used state.

Though the position of the buckle 6 is fixed in the aforementioned embodiment, the buckle 6 is also movable between the storage position and the service position in the seat belt apparatus 1 of this embodiment as shown in Figs. 5(a), 5(b). That is, a buckle device 30 comprises the buckle 6, a supporting lever 31 connected to the buckle 6, a lever turning member 32 for moving the supporting lever 31 to pivot, and a buckle driving motor 33 for driving the lever turning member 32.

The supporting lever 31 is attached to a vehicle seat 2 or a vehicle body such that the supporting lever 31 can pivots about a pivot pin 34 in the anteroposterior direction of the vehicle. The supporting lever 31 is provided with an elongated hole 31a which is formed at the opposite side of the pivot pin 34 from the buckle 6. The elongated hole 31a extends in the longitudinal direction of the supporting lever 31. By a joint pin 35 slidably extending through the elongated hole 31a, the supporting lever 31 and the lever turning member 32 are connected to each other allowing relative rotation and relative movement therebetween.

The end of the lever turning member 32 opposite to the side connected to the supporting lever 31 is connected to a rotary shaft 3 3 a of the buckle driving motor 33 through a screw-type expansion mechanism 36. The screw-type expansion mechanism 36 comprises an internally threaded member 37 fixed to the lever turning member 32 and an externally threaded member 38 which is formed on the rotary shaft 33a and can screw together with the internally threaded member 37. It should be noted that the externally threaded member 38 may be formed separately from the rotary shaft 3 3 a and connected to the rotary shaft 3 3 a.

As the rotary shaft 33a of the buckle driving motor 33 rotates so that the externally threaded member 38 rotates in the same direction, the internally threaded member 37 reversibly moves in the leftward direction or rightward direction, as seen in Figs. 5(a) and 5(b), according to the rotational direction of the buckle driving motor 33 so that the screw-type expansion mechanism 36 expands or contracts. The buckle driving motor 33 and the screw-type expansion mechanism 36 are disposed inside the seating portion 2a or below the seating portion 2a of the vehicle seat 2.

As shown in Fig. 5(a), when the buckle 6 is not used, the screw-type expansion mechanism 36 fully contracts so that the supporting lever 31 stands substantially upright. In this state, the buckle 6 is set in the storage position where the buckle 6 is stored within the seat back portion 2b of the vehicle seat 2. As shown in Fig. 5(b), when the buckle 6 is used, the screw-type expansion mechanism 36 fully expands so that the lever turning member 32 moves the supporting lever 31 to pivot about the pivot pin 34 in the clockwise direction. During the pivotal movement of the supporting lever 31, the joint pin 35 slides along the elongated hole 31a formed in the supporting lever 31. Then, the buckle 6 projects to the sitting side of the vehicle seat 2 through a buckle outlet (not shown) formed in the seat back portion 2b and is thus set to the service position. As the buckle driving motor 33 is stopped, the buckle 6 is locked in this position by the engagement between the externally threaded member 38 and the internally threaded member 37. In this manner, the supporting lever 31, the lever turning member 32, the pivot pin 34, and the joint pin 35 cooperate together to compose a buckle moving means of the present invention.

The buckle driving motor 33 of the buckle device 30 is connected to the control unit 25 as shown by chain double-dashed lines in Fig. 2(b) and is controlled by the control unit 25.

When the seat belt 4 is not used, the buckle 6 is set to the storage position as shown in Fig. 5(a). Therefore, similarly to the aforementioned tongue presenter device 10, the buckle 6 does not disturb the occupant who does not wear the seat belt 4 and is about to get on and off the vehicle, whereby the occupant can smoothly get on and off the vehicle.

When the motor 23 is driven to rotate, in the step S3, the control unit 25 drives the buckle driving motor 33 of the buckle device 30 along with the rotation of the motor 23 in the same manner as the aforementioned embodiment. Accordingly, the tongue 5 is conveyed to the tongue grasping position B in the same manner as the aforementioned embodiment and the buckle 6 is moved to the service position so that the occupant can easily insert the tongue 5 into the buckle 6 for latching during the operation for wearing the seat belt 4. As for the movement of the buckle 6 from the service position to the storage position, the control unit 25 drives the buckle driving motor 33 to rotate in the reverse direction according to the OFF signal of the buckle sensor 28 when the tongue 5 is released from the buckle 6. By the reverse rotation of the buckle driving motor 33, the screw-type expansion mechanism 36 contracts to move the supporting lever 31 to pivot in the counter-clockwise direction, thereby moving the buckle 6 from the service position shown in Fig. 5(b) to the storage position shown in Fig. 5(a).

The other structure, the other works, and the other effects of the seat belt apparatus 1 of this embodiment are the same as those of the seat belt apparatus 1 of the aforementioned embodiment.

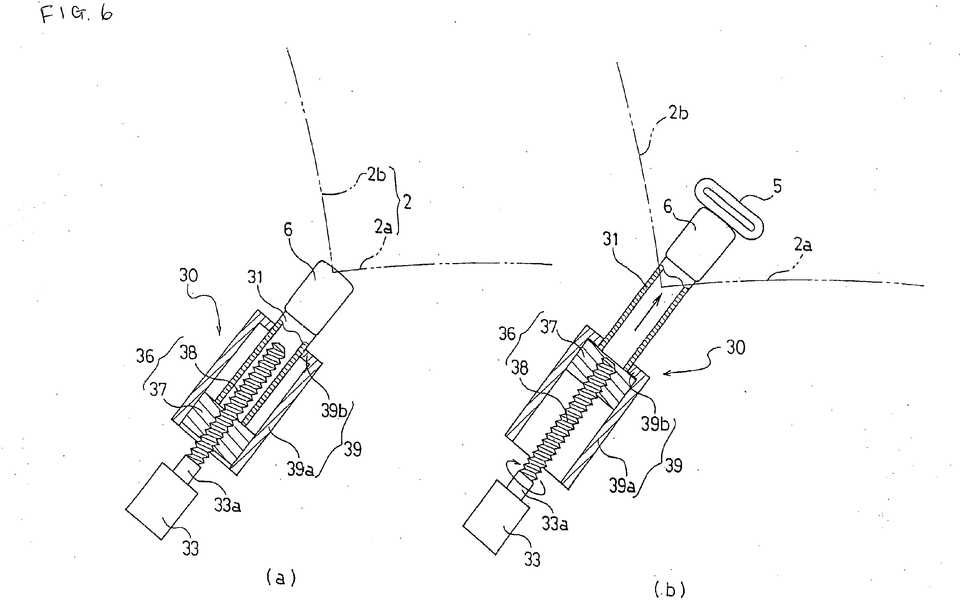

Figs. 6(a) and 6(b) schematically show further another embodiment of the present invention and are illustrations corresponding to Figs. 5(a) and 5(b).

In the aforementioned embodiment shown in Figs. 5(a) and 5(b), the buckle 6 is selectively set to the storage position or the service position by the pivotal movement of the supporting lever 31. In this embodiment, however, a buckle 6 is selectively set to the storage position or the service position by the linear movement of a supporting lever 31.

That is, as shown in Figs. 6(a) and 6(b), in a buckle device 30 of this embodiment, a screw-type expansion member 36 comprises an internally threaded member 37 and an externally threaded member 38 which is formed on a rotary shaft 33a and can screw together with the internally threaded member 37. Connected to the internally threaded member 37 is a cylindrical supporting lever 31 supporting the buckle 6. The internally threaded member 37 is arranged inside a cylindrical guide/restriction member 39 which is fixed to the vehicle seat 2 or the vehicle body. In this regard, the guide/restriction member 39 comprises a guide portion 39a for guiding the internally threaded member 37 not allowing relative rotation and allowing the movement in the longitudinal direction of the guide/restriction member 39 and a movement restriction portion 39b for restricting the movement of the buckle 6 toward the seating portion at the service position of the buckle 6.

As the rotary shaft 33a of the buckle driving motor 33 rotates so that the externally threaded member 38 rotates in the same direction, the internally threaded member 37 reversibly moves along the axial direction of the rotary shaft 33a according to the rotational direction of the buckle driving motor 33 so that the screw-type expansion mechanism 36 expands or contracts. That is, the supporting lever 31 projects from the guide/restriction member 39 or is retracted into the guide/restriction member 39.

The supporting lever 31, the screw-type expansion mechanism 36, and the guide/restriction member 39 compose the buckle moving means of the present invention.

Similarly to the aforementioned embodiment of the buckle device 30, the buckle device 30 has a storage position, shown in Fig. 6(a), where the buckle 6 is hidden by the vehicle seat 2 and a service position, shown in Fig. 6(b), where the buckle projects toward the seating portion of the vehicle seat 2.

In the buckle device 30 of this embodiment, the supporting lever 31 performs linear movement, not pivotal movement like the aforementioned embodiment. Therefore, the movement of the supporting lever 31 is stable, thereby further ensuring the setting of the buckle 6 between the storage position and the service position. In this regard, when the buckle 6 is set in the service position, the internally threaded member 37 fixed to the supporting lever 31 comes in contact with the movement restriction portion 39b, whereby the buckle 6 is locked from further moving toward the seating portion, i.e. the movement in the direction toward the seating portion is restricted.

When pulling force is applied to the buckle 6 through the seat belt 4 and the tongue 5 by inertial movement of the occupant in the forward direction due to large deceleration in the state that the occupant wears the seat belt 4 with the buckle 6 being latched with the tongue 5, the force is securely received by the guide/restriction member 39 through the supporting lever 31 and the internally threaded member 37.

The other structure, the other works, and the other elects of the seat belt apparatus 1 of this embodiment are substantially the same as those of the embodiment shown in Figs. 5(a) and 5(b).

By the way, in the embodiments shown in Figs. 5(a), 5(b) and Figs. 6(a), 6(b), the buckle 6 projects somewhat upward from the seating surface 2a₁ of the vehicle seat 2 at a position near the lumbar portion of the occupant. Since the height of the buckle 6 in the service position is relatively low, the buckle 6 is never positioned in front of the occupant's eyes even when the buckle 6 projects as mentioned above so that the occupant does not experience discomfort.

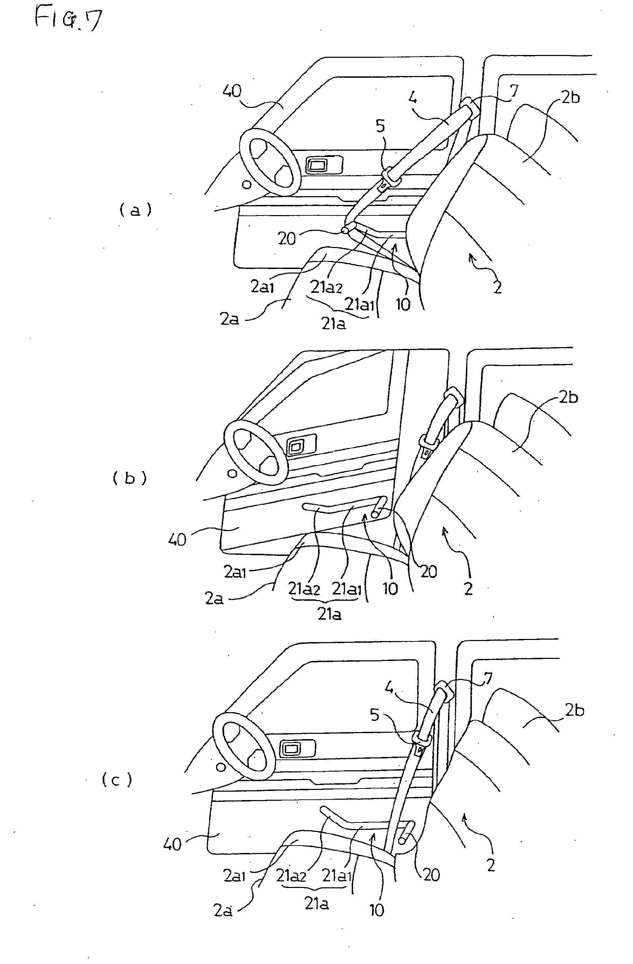

Figs. 7(a)-7(c) show still another embodiment of the seat belt apparatus according to the present invention, wherein Fig. 7(a) is an illustration schematically showing a state that a belt conveying member is in a tongue grasping position, Fig. 7(b) is an illustration schematically showing a state that the belt conveying member is in a tongue storage position and a door is opened, and Fig. 7(c) is an illustration schematically showing a state that the belt conveying member is in the tongue storage position and the door is closed.

In the aforementioned embodiment, the tongue presenter device 10 is disposed on the vehicle seat 2. In the seat belt apparatus 1 of this embodiment as shown in Figs. 7(a) through 7(c), a tongue presenter device 10 is disposed on a door 40 instead of the vehicle seat 2. Figs. 7(a) through 7(c) show only a guide slot 21a, composed of a horizontal portion 21a₁ extending in the horizontal direction and a sloping portion 21a₂ extending with an angle relative to the horizontal direction just like the guide slot 21a of the aforementioned embodiment, and a belt conveying member 20. The door 40 is provided with a same tongue presenter device 10 as that of the aforementioned embodiment. When the guide pin 22 is positioned within the horizontal portion 21 a₁ of the guide slot 21a in a state that the door 40 is closed, the belt conveying member 20 is set at a level lower than the seat surface 2a₁ of the vehicle seat. When the guide pin 22 is positioned at the terminal end of the sloping portion 21a₂ of the guide slot 21 a, the belt conveying member 20 is set at a level higher than the seat surface 2a₁ at a front side portion of the vehicle seat.

Since the tongue presenter device 10 is disposed on the door 40 which can be opened and closed, the tongue presenter device 10 moves together with door 40 when the door 40 is opened as shown in Fig. 7(b). Accordingly, the belt conveying member 20 of the tongue presenter device 10 is separated from the seat belt 4 which is in the storage position. When the door 40 is closed, the belt conveying member 20 may come in contact with the seat belt 4 in the storage position or come to a position ahead of the seat belt 4. To avoid this, in this embodiment as shown in Fig. 7(c), the belt conveying member 20 is set to be spaced apart from the seat belt 4 in rearward direction by a predetermined distance so that the belt conveying member 20 always comes to a position behind the seat belt 4. Therefore, in this embodiment, when the belt conveying member 20 moves forward, the conveying member 20 comes in contact with the seat belt 4 after eliminating the predetermined distance. Since the seat belt 4 has flexibility so that it is relatively soft similarly to the aforementioned embodiment, the storage position of the seat belt 4 when not used may be shifted and may not be constant. For this, a suitable means for maintaining the storage position of the seat belt 4 when not used is provided so that the storage position of the seat belt 4 becomes constant, but the means is not shown.

In the seat belt apparatus 1 of this embodiment having the aforementioned structure, the major part of the tongue presenter device 10 besides the belt conveying member 20 is arranged inside the door 40 so that the tongue presenter device 10 little disturb the occupant. Further, there is no need to provide a space specially for mounting the tongue presenter device 10 in the vehicle, thereby effectively reducing the mounting space. Furthermore, the major part of the tongue presenter device 10 is hidden by the door 40, thereby improving the appearance.

The other structure, the other works, and the other effects of the seat belt apparatus 1 of this embodiment are substantially the same as those of the embodiment shown in Figs. 1(a), 1(b). In the seat belt apparatus of the embodiment shown in Figs. 7(a)-7(c), similarly to the embodiments shown in Figs. 5(a), 5(b) and Figs. 6(a), 6(b), a buckle device 30 can be provided such that the buckle 6 is movable between the storage position and the service position.

The guide slot 21a does not necessarily have the sloping portion 21a₂ so that the guide slot 21 may be composed only of the horizontal portion 21a₁, i.e., may be formed linearly.

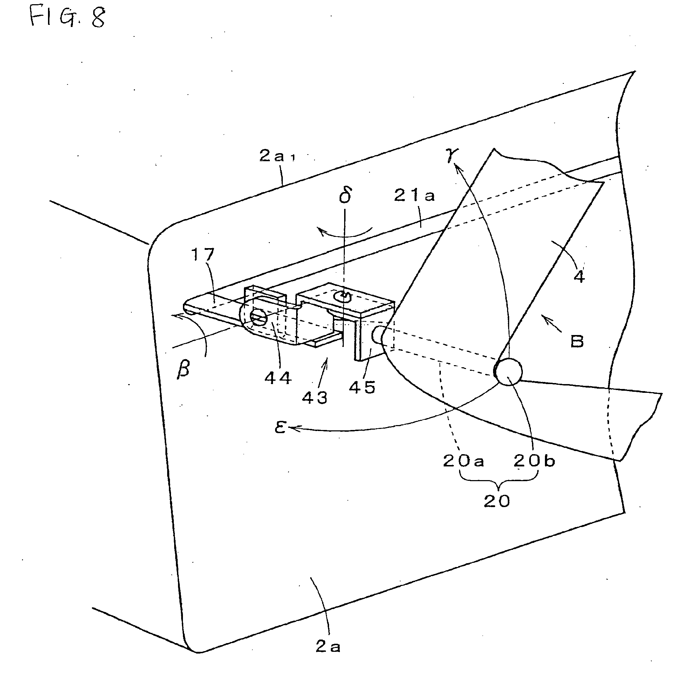

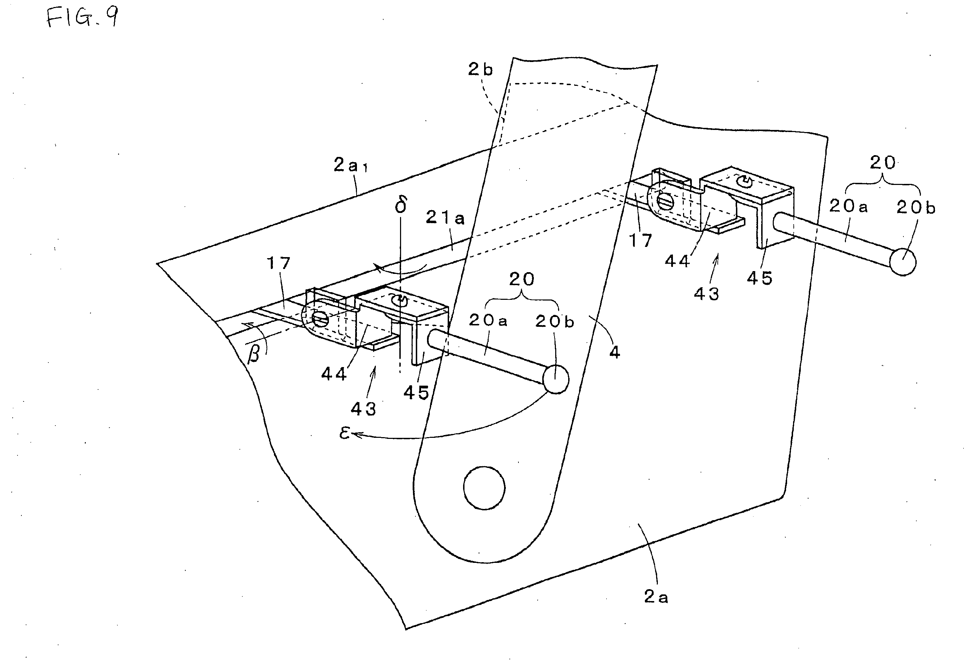

Fig. 8 is an illustration schematically showing a part of another embodiment of the seat belt apparatus according to the present invention and Fig. 9 is an illustration schematically showing another part of the seat belt apparatus of the embodiment shown in Fig. 8.

In any of the aforementioned embodiments, the tongue presenter device 10 is arranged outside of the vehicle seat 2. In the seat belt apparatus 1 of this embodiment, however, a major part of a tongue presenter device 10 is arranged inside the seating portion 2a of the vehicle seat 2. As shown in Fig. 8 and Fig. 9, a guide slot 21a as mentioned above is formed in a side surface of the seating portion 2a and linearly extends in the anteroposterior direction of the vehicle from a position near the front end of the seating portion 2a as shown in Fig. 8 to a position near the rear end of the seating portion 2a as shown in Fig. 9. That is, in this embodiment, the guide slot 21a has no sloping portion 21a₂.

A belt conveying member 20 projects outside of the vehicle seat 2 through the guide slot 21 a from the tongue presenter device 10 inside the seating portion 2a. In this regard, the belt conveying member 20 is attached to a lever supporting member 17 via an articulated mechanism 43. The lever supporting member 17 screw together with an externally threaded shaft 16 (not shown in Fig. 8 and Fig. 9) similarly to the aforementioned embodiments so that the lever supporting member 17 moves along the guide slot 21a, i.e. the side edge in the anteroposterior direction of the vehicle of the seating portion 2a of the vehicle seat 2, according to the rotation of the externally threaded shaft 16.

The articulated mechanism 43 comprises a first supporting member 44 as a lever member which is attached to the lever supporting member 17 such that the first supporting member 44 can pivot about an axis β, extending in the anteroposterior direction of the vehicle, in a counter-clockwise direction γ as shown in Fig. 8, and a second supporting member 45 as a lever member which is attached to the first supporting member 44 such that the second supporting member 45 can pivot about an axis δ, extending in the vertical direction of the vehicle, in a clockwise direction ε as shown in Fig. 8. In this regard, the first supporting member 44 is prevented from further pivoting in the clockwise direction from the position shown in Fig. 8 by a known means, but not specifically shown, and is always biased in the clockwise direction by a spring (not shown). Therefore, the first supporting member 44 is normally set to a belt carrying position shown in Fig. 8. The second supporting member 45 is prevented from further pivoting in the counter-clockwise direction from the belt carrying position shown in Fig. 8 by a known means, but not specifically shown, and is always biased in the counter-clockwise direction by a spring (not shown). Therefore, the second supporting member 45 is normally set at the position shown in Fig. 8.

A shaft portion 20a of the belt conveying member 20 is formed to project from the second supporting member 45. When the first and second supporting members 44, 45 are set in the position shown in Fig. 8, the shaft portion 20a is substantially parallel with the lever supporting member 17. Accordingly, the belt conveying member 20 is normally set in the belt conveying position shown in Fig. 8. When force exceeding a predetermined value is applied to the belt conveying member 20 in a direction for pivotal movement about the axis β, the belt conveying member 20 pivots about the axis β in the counter-clockwise direction γ shown in Fig. 8 to escape from the belt conveying position. When force exceeding a predetermined value is applied to the belt conveying member 20 in a direction for pivotal movement about the axis δ, the belt conveying member 20 pivots about the axis δ in the clockwise direction ε shown in Fig. 8 to escape from the belt conveying position. That is, the belt conveying member 20 is normally set in the belt conveying position for conveying the seat belt 4, is kept in the belt conveying position when force from the tongue grasping position to the tongue storage position is applied to the belt conveying member 20, and pivots to escape from the belt conveying position when force exceeding the predetermined value in any direction other than the direction from the tongue grasping position to the tongue storage position is applied to the belt conveying member 20.

The other structure of the seat belt apparatus of this embodiment is the same as that of the aforementioned embodiment.

In the seat belt apparatus 1 having the aforementioned structure, the lever supporting member 17 and the belt conveying member 20 move in the anteroposterior direction of the vehicle along the side edge of the seating portion 2a of the vehicle seat 2 according to the rotation of the externally threaded shaft 16 similarly to the aforementioned embodiments. In a state that the belt conveying member 20 is in position as shown in Fig. 8 for setting the seat belt 4 and the tongue 5 (not shown in Fig. 8) in the tongue grasping position B, the occupant grasps the seat belt 4 or the tongue 5 for inserting the tongue 5 into the buckle 6 for latching. Since the belt conveying member 20 projects from the occupant side in this embodiment, the occupant may have difficulty in taking the seat belt 4 off the belt conveying member 20. However, since the shaft portion 20a of the belt conveying member 20 pivots about the axis β in the counter-clockwise direction γ, i.e. upward, the seat belt 4 is easily taken off the belt conveying member 20. As the seat belt 4 is taken off the belt conveying member 20, the belt conveying member 20 automatically returns to the position shown in Fig. 8 by biasing force applied. As the tongue 5 is inserted into the buckle 6 for latching similarly to the aforementioned embodiments, the belt conveying member 20 returns to the position shown in Fig. 9 for setting the seat belt 4 and the tongue (not shown in Fig. 9) to the tongue storage position A.

By the way, when the occupant releases the seat belt 4 without inserting the tongue 5 into the buckle 6 after taking the tongue 5 off the belt conveying member 20, the seat belt retractor winds up the seat belt 4 similarly to the conventional one so that the seat belt 4 and the tongue 5 return to the tongue storage position A shown in Fig. 9. After a lapse of a predetermined period of time, the belt conveying member 20 is about to return to the position shown in Fig. 9 corresponding to the storage position A. However, the belt conveying member 20 may collide with the seat belt 4 already returned in the tongue storage position A so that the belt conveying member 20 is blocked from further returning. Since the shaft portion 20a of the belt conveying member 20 pivots about the axis δ in the clockwise direction ε, i.e. leftward, however, the belt conveying member 20 passes the seat belt 4 so as to return to the position shown in Fig. 9 corresponding to the tongue storage position A.

In the seat belt apparatus 1 of this embodiment having the aforementioned structure, the major part of the tongue presenter device 10 other than the belt conveying member 20 is disposed inside the seating portion 2a of the vehicle seat 2. Therefore, the tongue presenter device 10 does not disturb the occupant similarly to the aforementioned embodiment as shown in Figs. 7(a)-7(c). Further, there is no need to provide a space specially for mounting the tongue presenter device 10 in the vehicle body, thereby effectively reducing the mounting space. Furthermore, the major part of the tongue presenter device 10 is hidden by the vehicle seat 2, thereby improving the appearance.

The other structure, the other works, and the other effects of the seat belt apparatus of this embodiment are the same as those of the aforementioned embodiment shown in Figs. 1(a) and 1(b), except the operation and effect by the sloping portion 21a₂ of the guide slot 21 a.

Though the articulated mechanism 43 is disposed outside the vehicle seat 2, the articulated mechanism 43 may be disposed inside the seating portion 2a of the vehicle seat 2. In this case, an escape slot for receiving the shaft portion 20a of the belt conveying member 20 when the shaft portion 20a pivots upward about the axis β must be formed upward from the leftmost position of the guide slot 21 a shown in Fig. 8.

The belt conveying member 20 and the articulated mechanism 43 are both shown double in Fig. 9, these are shown double for the sake of convenience, so it should be understood that these components are actually provided singly.

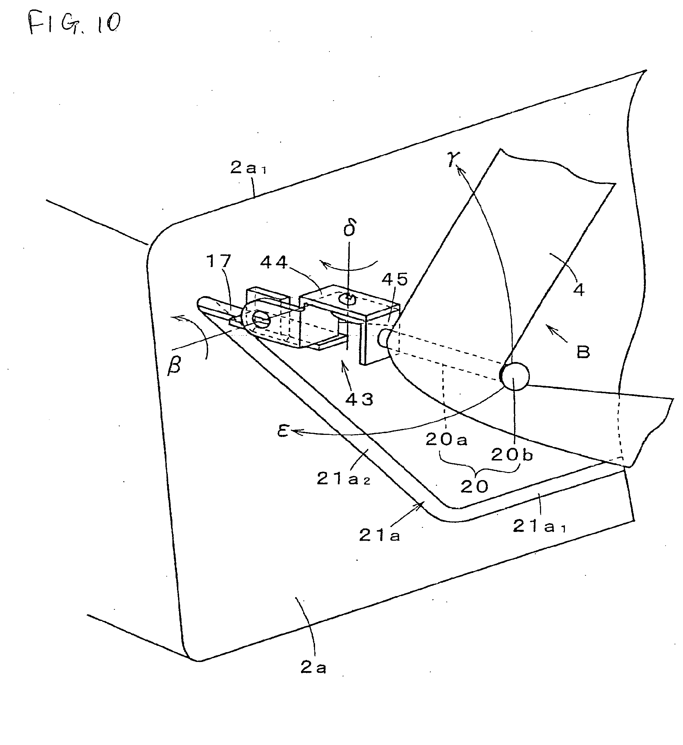

Fig. 10 is an illustration similar to Fig. 8, but schematically showing a part of another embodiment of the seat belt apparatus according to the present invention.

The guide slot 21a is formed linearly in the aforementioned embodiment shown in Fig. 8. In the seat belt apparatus 1 of this embodiment, however, similarly to the embodiment shown in Figs. 1(a), 1(b), a guide slot 21a comprises a horizontal portion 21 a₁ and a sloping portion 21a₂ as shown in Fig. 10. Also in this embodiment, in a position shown in Fig. 10 in which the seat belt 4 and the tongue 5 (not shown in Fig. 10) are in the tongue grasping position B, the belt conveying member 20 is set at a level lower than the seat surface 2a₁ of the seating portion 2a of the vehicle seat 2. However, the belt conveying member 20 may be set to a level higher than the seat surface 2a₁ of the seating portion 2a of the vehicle seat 2.

The other structure of the seat belt apparatus of this embodiment is the same as that of the embodiment shown in Fig. 8 and Fig. 9. The works and effects of the seat belt apparatus of this embodiment are the same as those of the embodiment shown in Fig. 8.

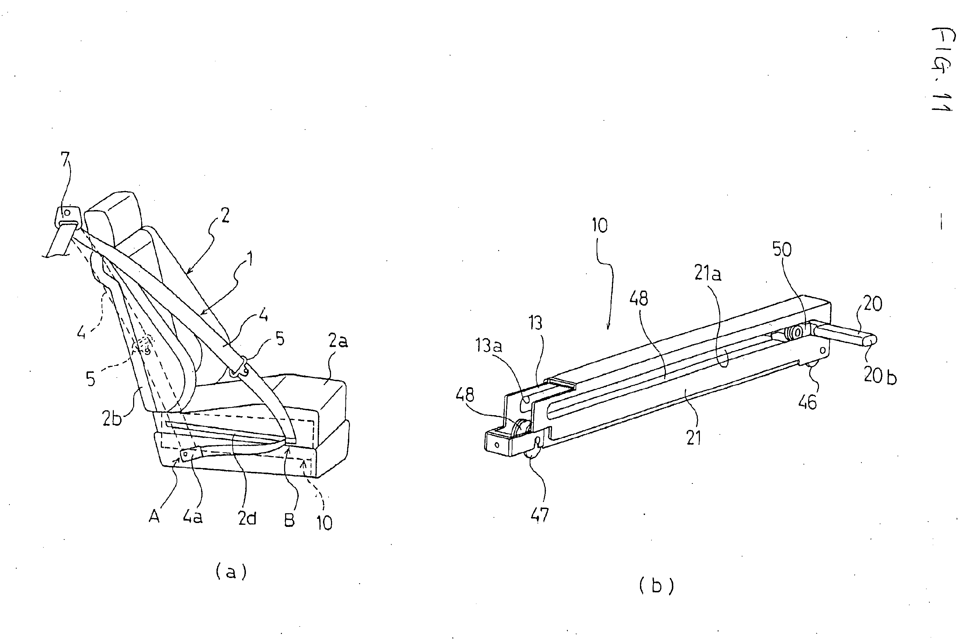

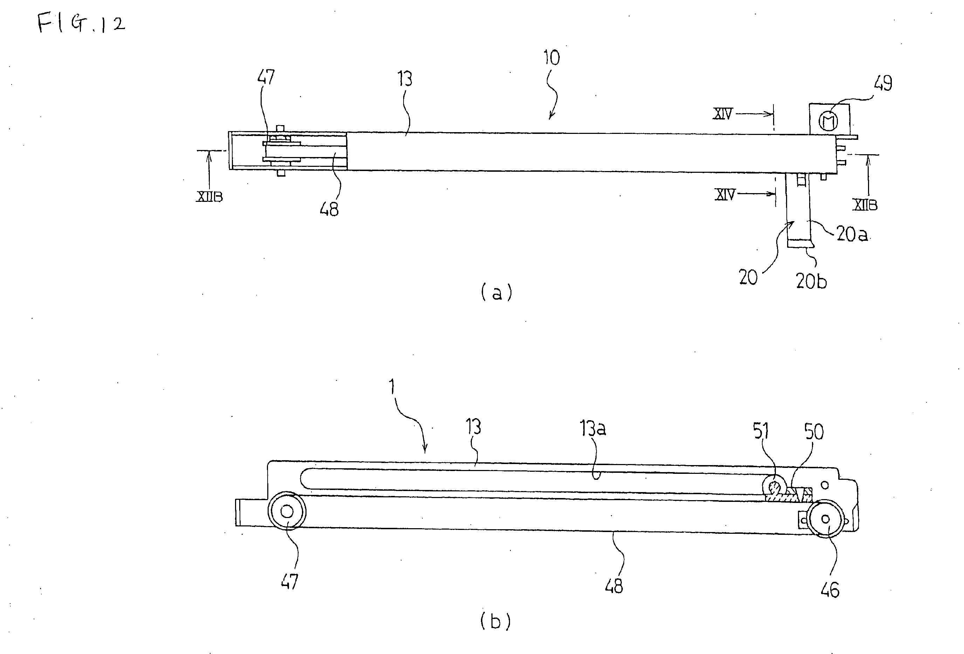

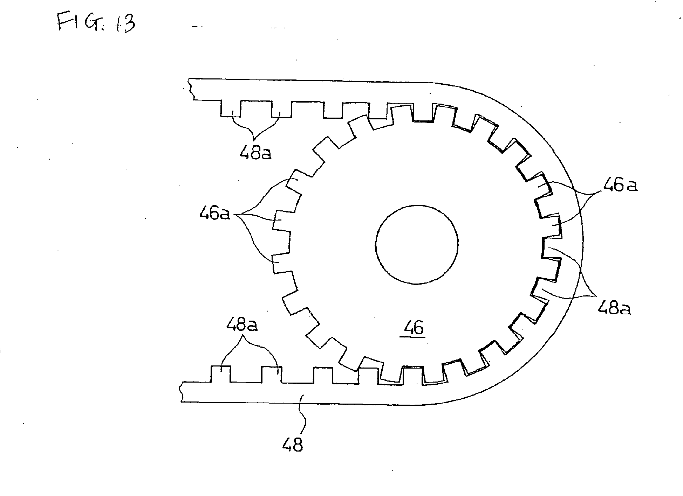

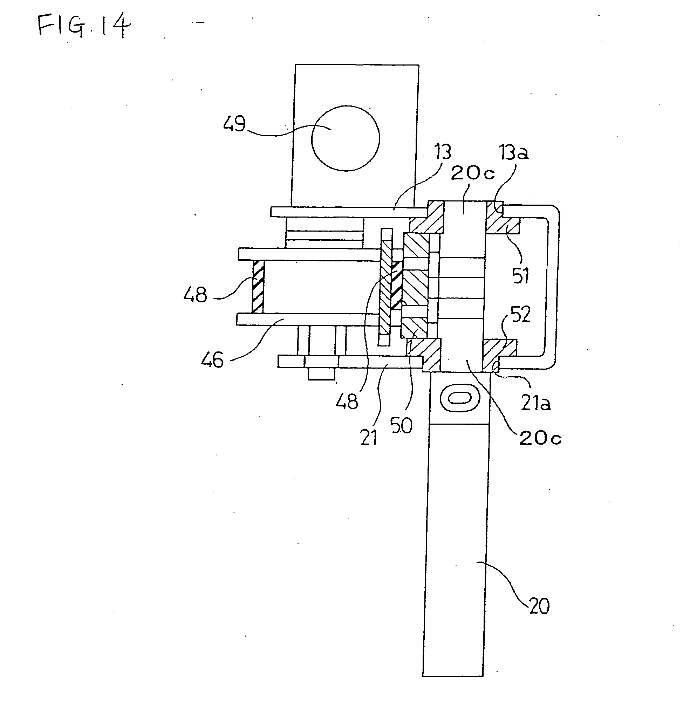

Figs. 11(a), 11(b) schematically show further another embodiment of the seat belt apparatus according to the present invention, wherein Fig. 11(a) is a perspective schematic view showing a seat belt apparatus and Fig. 11 (b) is a perspective schematic view of a tongue presenter device. Figs. 12(a), 12(b) schematically show the tongue presenter device shown in Fig. 11(b), wherein Fig. 12(a) is a plan view thereof and Fig. 12(b) is a sectional view taken along a line XIIB-XIIB in Fig. 12(a). Fig. 13 is a partially enlarged view showing an endless belt and a pulley used in the tongue presenter device shown in Fig. 11(b) and Fig. 14 is a sectional view taken along a line XIV-XIV in Fig. 12(a).

As shown in Fig. 11 (a), in the seat belt apparatus 1 of this embodiment, a major part of the tongue presenter device 10 is disposed inside the seating portion 2a of the vehicle seat 2 similarly to the tongue presenter device 10 of the aforementioned embodiment shown in Fig. 8. In the aforementioned embodiment shown in Fig. 8, the lever supporting member 17 which screws together with the externally threaded shaft 16 is moved along the externally threaded shaft 16 by rotation of the externally threaded shaft 16, whereby the belt conveying member 20 conveys the seat belt 4. However, in the tongue presenter device 10 of the seat belt apparatus 1 of this embodiment, a belt conveying member 20 is moved by a pair of toothed pulleys and a toothed endless belt wound around the toothed pulleys with tension.

As specifically described, as shown in Fig. 11(b) and Figs. 12(a), 12(b), the tongue presenter device 10 of this embodiment comprises a supporting frame 13 and a guide member 21 having a guide slot 21 a similarly to the tongue presenter device 10 of the embodiment shown in Figs. 1(a), 1(b), wherein the supporting frame 13 is fixed inside the vehicle seat 2. At one end of front and rear ends of the supporting frame 13 and the guide member 21, a driving pulley 46 is rotatably supported. At the other end of the front and rear ends of the supporting frame 13 and the guide member 21, a driven pulley 47 is rotatably supported (in the illustrative example, the driving pulley 46 is arranged at the front end (the right end in Fig. 11(b) of the supporting frame 13 and the guide member 21 and the driven pulley 47 is arranged at the rear end (the left end in Fig. 11(b) of the supporting frame 13 and the guide member 21).

Between the driving pulley 46 and the driven pulley 47, the endless belt 48 made of a flexible material such as rubber or resin is wound around. As shown in Fig. 13, the driving pulley 46 is a toothed pulley having a predetermined number of external teeth 46a and the endless belt 48 is a toothed endless belt having a predetermined number of internal teeth 48a which can mesh the external teeth 46a. The driven pulley 47 is also a toothed pulley having a predetermined number of external teeth similarly to the driving pulley 46, but not shown. The internal teeth 48a of the endless belt 48 can also mesh with the external teeth of the driven pulley 47. As shown in Fig. 12(a) and Fig. 14, the driving pulley 46 is rotated by a motor 49. By the rotation of the driving pulley 46, the endless belt 48 and the driven pulley 47 are rotated in the same direction as that of the driving pulley 46. During this, the teeth 48a of the endless belt 48 mesh the external teeth 46a of the driving pulley 46 and the external teeth of the driven pulley 47, thereby ensuring the rotation of the endless belt 48.

As shown in Fig. 14 in detail, the belt conveying member 20 is fixed to the endless belt 48 by a fixture 50 so that the belt conveying member 20 moves together with the movement of the endless belt 48. In this case, the belt conveying member 20 extends within a plane parallel with the belt surface of a linear portion of the endless belt 48 and in a direction perpendicular to the moving direction of the endless belt 48.

The supporting frame 13 is also provided with a guide slot 13a having the same configuration and the same size as those of the guide slot 21 a of the guide member 21 such that the guide slot 13a is formed at a position corresponding to the guide slot 21 a of the guide member 21. An extension shaft 20c of the belt conveying member 20 comprises a pair of rollers 51, 52 as friction reduction means which are rotatably disposed such that the rollers 51, 52 can not move in the axial direction. The rollers 51, 52 can roll on the guide slots 13a, 21a and are guided along the longitudinal direction of the guide slots 13a, 21 a. Therefore, the length of the guide slots 13 a, 21a in the longitudinal direction is set to be such a length as to allow the fixture 50 to move within a range of the linear portion of the endless belt 48 and a range not to collide with the pulleys 46, 47, that is, such a length as to allow the belt conveying member 20 to move between the tongue storage position and the tongue grasping position.

As shown in Fig. 11 (a), the side surface of the seating portion 2a of the vehicle seat 2 is provided with a slot 2d for allowing the belt conveying member 20 to project outside from the inside of the vehicle seat 2. The slot 2d is formed at a position corresponding to the guide slot 21a and is set to have such a length as to allow the belt conveying member 20 to move between the tongue storage position and the tongue grasping position.

The other structure of the seat belt apparatus of this embodiment is the same as that of the embodiment shown in Fig. 8.

In the tongue presenter device 10, the belt conveying member 20 is moved by the endless belt 48 made of a flexible material such as rubber or resin and the pair of the driving pulley 46 and the driven pulley 47, thereby restrain the occurrence of noise while the belt conveying member 20 moves. Since the belt conveying member 20 is moved with the rollers 51, 52, the rubbing sand between the belt conveying member 20 and the supporting member 13 or the guide member 21 while the belt conveying member 20 moves can be further reduced.

The other works and effects of the seat belt apparatus 1 of this embodiment are the same as those of the embodiment shown in Fig. 8.

When rubbing noise is not a problem, the rollers 51, 52 may be omitted so that the extension shaft 20c of the belt conveying member 20 is guided directly by the supporting member 13 and the guide member 21. Instead of the rollers 51, 52, the extension shaft (portions of the belt conveying member 20 to be in contact with the guide slots 13a, 2 1 a) 20c of the belt conveying member 20 and/or the inner peripheral surfaces of the guide slots 13a and 21a may be coated with resin as the friction reduction means so as to reduce the rubbing noise.

The driving pulley 46, the driven pulley 47, and the endless belt 48 are not necessarily toothed pulleys and a toothed belt and may be pulleys without teeth and a belt without teeth. In order to ensure the movement of the belt conveying member 20, however, these are preferably toothed pulleys and a toothed belt.

The tongue presenter device 10 of this embodiment can be adopted to a case in which the guide slot 21 is linearly formed as the embodiments shown in Figs. 5(a), 5(b), Figs. 6(a), 6(b), and Figs. 7(a)-7(c).

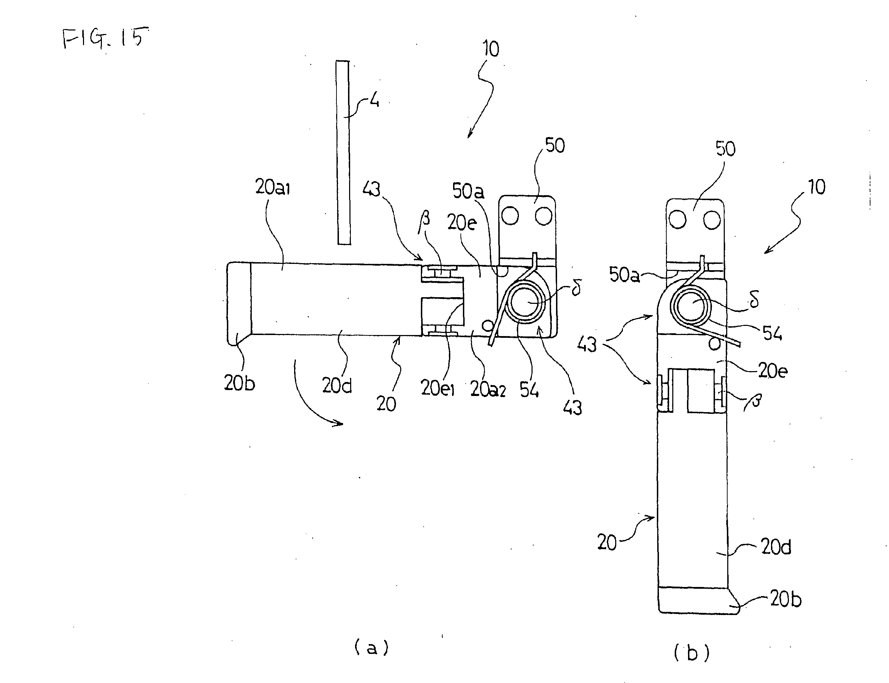

Figs. 15(a), 15(b) partially show a tongue presenter device of still further another embodiment of the seat belt apparatus according to the present invention, wherein Fig. 15(a) is a top view of a belt conveying member and Fig. 15(b) is an illustration showing the pivoted state of the belt conveying member.

In the aforementioned embodiment shown in Fig. 11 (a) through Fig. 14, the belt conveying member 20 is mounted to the fixture 50, fixed to the endless belt 48, not to allow the relative rotation. In the tongue presenter device 10 of this embodiment, however, a belt conveying member 20 is pivotably mounted to a fixture 50 via an articulated mechanism 43 similarly to the tongue presenter device 10 of the embodiment shown in Fig. 8.

That is, as shown in Figs. 15(a) and 15(b), the belt conveying member 20 of this embodiment comprises two members: a first conveying member 20d and a second conveying member 20e. The first conveying member 20d has a part 20a₁ of a shaft portion 20a and a flange 20b formed at an end of the part 20a₁. The second conveying member 20e has a rest 20a₂ of the shaft portion 20a.

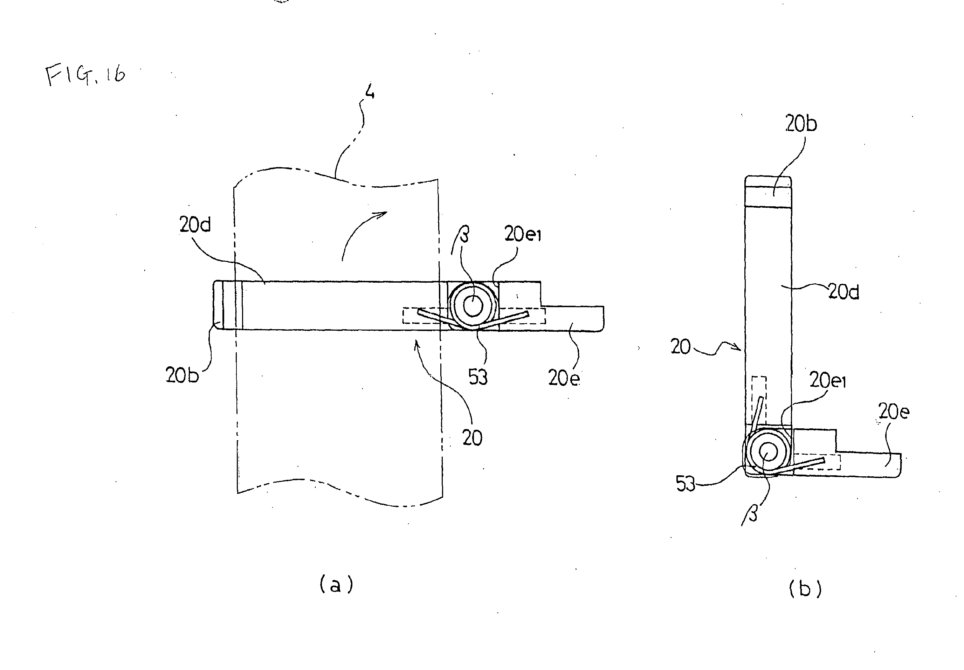

As shown in Fig. 15(a) and Fig. 16(a), the first and second conveying members 20d, 20e are connected to each other in such a manner as to allow pivotal movement about a shaft β in the anteroposterior direction of the vehicle. In this regard, the first conveying member 20d is adapted such that it can pivot relative to the second conveying member 20e between the belt conveying position where the belt conveying member 20 takes a linear shape as shown in Fig. 16(a) and the escaping position where the belt conveying member 20 takes a bent shape as shown in Fig. 16(b). In the belt conveying position of the first conveying member 20d, the first conveying member 20d collides with a stopper (not shown) of the second conveying member 20e, thereby preventing the first conveying member 20d from further pivoting in the counter-clockwise direction as seen in Fig. 16(a). In the belt escaping position of the first conveying member 20d, the first conveying member 20d collides with a stopper 20e₁ of the second conveying member 20e, thereby preventing the first conveying member 20d from further pivoting in the clockwise direction as seen in Fig. 16(b).

A torsion spring 53 is disposed and compressed between the first conveying member 20d and the second conveying member 20e. By the torsion spring 53, the first conveying member 20d is always biased in the counter-clockwise direction, as seen in Fig. 16(a), relative to the second conveying member 20e. Accordingly, the first conveying member 20d is normally kept in the belt conveying position. When force exceeding a predetermined value is applied to the first conveying member 20d in a direction for pivotal movement to the escaping position, the first conveying member 20d pivots in the clockwise direction to the maximum escaping position against the biasing force of the torsion spring 53.

As shown in Figs. 15(a) and 15(b), the second conveying member 20e is attached to a fixture 50 fixed to the endless belt 48 such that the second conveying member 20e can pivot about a pin δ in the vertical direction of the vehicle. In this regard, the second conveying member 20e can pivot relative to the fixture 50 between the belt conveying position shown in Fig. 15(a) where the second conveying member 20e extends perpendicular to the endless belt 48 and the escaping position shown in Fig. 15(b) where the second conveying member 20e pivots at a right angle so as to extend in parallel with the endless belt 48. When the second conveying member 20e is in the belt conveying position, the second conveying member 20e collides with a stopper 50a of the fixture 50, thereby preventing the second conveying member 20e from further pivoting in the clockwise direction as seen in Fig. 15(a). When the second conveying member 20e is in the escaping position, the second conveying member 20e collides with a stopper (not shown) of the fixture 50, thereby preventing the second conveying member 20e from further pivoting in the counter-clockwise direction as seen in Fig. 15(b).

Further, a torsion spring 54 is disposed and compressed between the fixture 50 and the second conveying member 20e. By the torsion spring 54, the second conveying member 20e is always biased relative to the fixture 50 in the clockwise direction as seen in Fig. 15(a). Therefore, normally, the second conveying member 20e is kept in the belt conveying position. When force exceeding a predetermined value is applied to the second conveying member 20e in a direction for pivotal movement to the escaping position, the second conveying member 20e pivots in the counter-clockwise direction to the fully escaping position against the biasing force of the torsion spring 54.

The other structure of the tongue presenter device 10 of this embodiment is the same as that of the aforementioned embodiment shown in Fig. 11 (a) through Fig. 14.

The action of the articulated mechanism 43 of the tongue presenter device 10 of this embodiment is the same as that of the articulated mechanism 43 of the embodiment shown in Fig. 8.

In the seat belt apparatus of this embodiment, the belt conveying member 20 is composed of the two members which are pivotably connected to each other so that a part of the articulated mechanism 43 is provided in the belt conveying member 20 itself, thereby simplifying the structure of the articulated mechanism 43. The other works and effects of the articulated mechanism 43 of this embodiment are the same as those of the embodiment shown in Fig. 8 and the other works and effects of the seat belt apparatus 1 of this embodiment are the same as those of the embodiment shown in Fig. 11 (a) through Fig. 14.

The articulated mechanism 43 of this embodiment can be adopted to any of the embodiments shown in Fig. 1(a) through Fig. 10.

The tongue presenter device 10 may be disposed in a part other than the vehicle seat 2 and door 40 of the vehicle body such as a floor or a side sill. As mentioned above, the tongue presenter device 10 is disposed to extend in the anteroposterior direction of the vehicle along a vehicle component such as the vehicle seat 2, the door 40, the vehicle floor, or the side sill. There is no need to provide a space specially for mounting the tongue presenter device 10 in the vehicle, thereby achieving the mounting of the tongue presenter device 10 with effectively reduced mounting space.

Though the tongue presenter device 10 is provided on the right side of the vehicle seat 2 on the right side of the vehicle in any of the aforementioned embodiments, the tongue presenter device 10 may be provided on the left side of the vehicle seat 2 on the left side of the vehicle.

When the belt conveying member 20 is set from the tongue grasping position B to the tongue storage position A or when the buckle 6 is set from the service position to the storage position, the control unit 25 controls to drive the motor 23 or 33 according to the OFF signal of the buckle sensor 28 in any of the aforementioned embodiment. However, the buckle sensor 28 may be omitted. In this case, the control unit 25 drives the motor 23 or 33 by an output signal by a manual button. For easy handling of the tongue 5 and the buckle 6 and easy wearing of the seat belt 4, it is preferable to that the belt conveying member 20 is automatically moved between the tongue storage position A and the tongue grasping position B and that the buckle 6 is automatically moved between the storage position and the service position.

### Industrial Applicability

The tongue presenter device and the seat belt apparatus employing the same of the present invention are suitably used to a seat belt apparatus installed in a vehicle such as an automobile for restraining an occupant with a seat belt thereof and in which a tongue slidably supported by the seat belt is inserted into and latched with a buckle fixed to the vehicle so that the seat belt is worn by an occupant seated in a vehicle seat.

## Claims

1. A tongue presenter device for conveying a seat belt (4), which slidably supports a tongue (5) and can restrain an occupant, to a tongue grasping position, which is set in front of the occupant seated in a vehicle seat (2) and on a side of said vehicle seat (2); said tongue presenter device comprising at least:
a belt conveying member (20) which can be in contact with said seat belt (4) and conveys said seat belt (4), a moving means (11) for moving the belt conveying member (20) in an anteroposterior direction of the vehicle between a tongue storage position (A) which is set on a side of a rear portion (2b) of said vehicle seat (2) and said tongue grasping position (B), and a driving unit (12) for actuating said moving means (11).

2. A tongue presenter device as claimed in claim 1, wherein said moving means (11) moves said belt conveying member (20) forward from said tongue storage position (A) along a side surface of said vehicle seat (2) with keeping its low level and sets said belt conveying member (20) to a high level higher than said low level at a position which is a predetermined distance apart from said tongue storage position (A) and is near said tongue grasping position (B).

3. A tongue presenter device as claimed in claim 2, wherein said low level is set lower than said seat surface of the vehicle seat (2) and said high level is higher than said seat surface of the vehicle seat (2).

4. A tongue presenter device as claimed in any one of claims 1 through 3, wherein said belt conveying member (20) is normally set in a belt conveying position for conveying said seat belt (4), and when force in a direction from said tongue grasping position (B) to said tongue storage position (A) is applied to said belt conveying member (20), said belt conveying member (20) is held at said belt conveying position, while when force exceeding a predetermined value other than the force in a direction from said tongue grasping position (b) to said tongue storage position (A) is applied to said belt conveying member (20), said belt conveying member (20) pivots to escape from said belt conveying position.

5. A tongue presenter device as claimed in any one of claims 1 through 4, wherein said moving means (11) comprises an externally threaded shaft (16) which is arranged in parallel with the side surface (2c1) of said vehicle seat (2) and in parallel with the bottom surface (2c2) of said vehicle seat (2), a lever supporting member (17) which screws together with said externally threaded shaft (16) and is moved along the externally threaded shaft (16) by rotation of said externally threaded shaft (16), a lever (19) of which one end is pivotably connected to said lever supporting member (17) and which is provided at the other end thereof with said belt conveying member (20) and is provided at a middle portion thereof with a guide pin (22), and a guide member (21) having a guide slot (21a) for guiding said guide pin (22), wherein
said guide slot (21 a) comprises a horizontal portion (21a1) which horizontally extends forward from a position corresponding to the tongue storage position (A) of said belt conveying member (20), and a sloping portion (21 a2) which is continued to said horizontal portion (21al) at a position corresponding to said position near said tongue grasping position (B) of said belt conveying member (20) and extends obliquely upward toward a position corresponding to said tongue grasping position (B) of said belt conveying member (20).

6. A tongue presenter device as claimed in any one of claims 1 through 5, wherein said moving means (11) is disposed on the side surface (2c1) of said vehicle seat (2), inside of a seating portion (2a) of said vehicle seat (2), a door (40) on the side of said vehicle seat (2), on a vehicle floor on the side of said vehicle seat (2), or on a side sill on the side of said vehicle seat (2).

7. A tongue presenter device as claimed in any one of claims 1 through 5, wherein said moving means (11) comprises a pair of pulleys (46, 47) which are spaced apart from each other by a predetermined distance in the anteroposterior direction of said vehicle seat (2) and an endless belt (48) which is wound around the pulleys (46, 47) with tension, wherein
said belt conveying member (20) is fixed to said endless belt (48) by a fixture (50).

8. A tongue presenter device as claimed in claim 7, wherein said moving means (11) comprises a guide member (21) having a guide slot (21a) for guiding said belt conveying member (20) and a friction reducing means (51, 52) arranged between said belt conveying member (20) and said guide slot (21a).

9. A tongue presenter device as claimed in claim 8, wherein said friction reducing means is a roller (51, 52) which is disposed on said belt conveying member (20) such that the roller (51, 52) can roll along the guide slot (21a) or a resin coating provided at least either on a portion of said belt conveying member (20) to be in contact with said guide slot (21a) or on the inner periphery of the guide slot (21a) of said guide member (21).

10. A tongue presenter device as claimed in any one of claims 1 through 9, wherein said belt conveying member (20) comprises a first conveying member (20d) and a second conveying member (20e), wherein the conveying member (20) is adapted such that said first conveying member (20d) can pivot relative to said second conveying member (20e) between a belt conveying position where said belt conveying member (20) takes a linear shape and a escaping position where said belt conveying member (20) takes a bent shape.

11. A tongue presenter device as claimed in claim 10, wherein said second conveying member (20e) comprises a first stopper and a second stopper (20e₁), wherein in said belt conveying position said first conveying member (20d) collides with said first stopper, thereby preventing said first conveying member (20d) from further pivoting in a first direction, wherein in the belt escaping position said first conveying member (20d) collides with said second stopper (20e₁), thereby preventing the first conveying member (20d) from further pivoting in a second direction opposite to the first direction.

12. A tongue presenter device as claimed in claim 11, wherein said conveying member (20) comprises a torsion spring (53) which is disposed between said first conveying member (20d) and said second conveying member (20e), wherein by said torsion spring (53) said first conveying member (20d) is always biased in the first direction relative to said second conveying member (20e), thereby said first conveying member (20d) is normally kept in the belt conveying position, wherein when force exceeding a predetermined value is applied to said first conveying member (20d) in a direction for pivotal movement to the escaping position said first conveying member (20d) pivots in the second direction to the escaping position against the biasing force of said torsion spring (53).

13. A tongue presenter device as claimed in claim 10 and any one of claims 7 through 9, wherein said second conveying member 20e is attached to said fixture (50) such that said second conveying member (20e) can pivot about a pin (δ) in the vertical direction of the vehicle, thereby said second conveying member (20e) can pivot relative to said fixture (50) between the belt conveying position and the escaping position where said second conveying member (20e) pivots at a right angle so as to extend in parallel with said endless belt (48), wherein said second conveying member 20e collides with a first stopper (50a) of said fixture 50, when said second conveying member (20e) is in the belt conveying position, thereby preventing said second conveying member (20e) from further pivoting in a first direction, wherein said second conveying member (20e) collides with a second stopper of said fixture (50), when said second conveying member (20e) is in the escaping position, thereby preventing said second conveying member (20e) from further pivoting in a second direction opposite to the first direction.

14. A tongue presenter device as claimed in claim 13, wherein said conveying member (20) comprises a torsion spring (54) which is disposed between said fixture (50) and said second conveying member (20e), wherein by said torsion spring (54) said second conveying member (20e) is always biased relative to said fixture (50) in the first direction, thereby said second conveying member (20e) is normally kept in the belt conveying position, wherein when force exceeding a predetermined value is applied to said second conveying member (20e) in a direction for pivotal movement to the escaping position said second conveying member (20e) pivots in the second direction to the escaping position against the biasing force of said torsion spring (54).

15. A buckle device for latching a tongue (5) of a seat belt (4); said buckle device (30) comprising:
a buckle (6), a moving means (31, 32; 31, 36) for moving the buckle (6) between a storage position where the buckle (6) is stored and a service position, and a driving means (33) for actuating the moving means.

16. A buckle device as claimed in claim 15, wherein said moving means comprises a supporting lever (31) connected to the buckle (6) and a lever turning member (32) for moving said supporting lever (31) to pivot, and
wherein said moving means (33) drive said lever turning member (32).

17. A buckle device as claimed in claim 16,
wherein said supporting lever (31) pivots about a pivot pin (34) of said buckle device (30) and is provided with an elongated hole (31a), which is formed at the opposite side of said pivot pin (34) from the buckle (6),
wherein said elongated hole (31a) extends in the longitudinal direction of said supporting lever (31),
wherein said supporting lever (31) and said lever turning member (32) are connected to each other by a joint pin (35) of said buckle device (30) slidably extending through said elongated hole (31a) allowing relative rotation and relative movement therebetween.

18. A buckle device as claimed in claim 16 or 17, wherein said lever turning member (32) opposite to the side connected to said supporting lever (31) is connected to a rotary shaft (33a) of said moving means (33) through a screw-type expansion mechanism (36), which comprises an internally threaded member (37) fixed to said lever turning member (32) and an externally threaded member (38) which is formed on said rotary shaft (33a) and can screw together with said internally threaded member (37).

19. A buckle device as claimed in claim 15,
wherein said moving means comprise a screw-type expansion member (36) which comprises an internally threaded member (37) and an externally threaded member (38) which is formed on a rotary shaft (33a) and can be screwed together with the internally threaded member (37), and a supporting lever (31) which supports the buckle (6) and is connected to said internally threaded member (37),
wherein said internally threaded member (37) is arranged inside a cylindrical guide/restriction member (39) of the buckle device which comprises a guide portion (39a) for guiding said internally threaded member (37) not allowing relative rotation and allowing the movement in the longitudinal direction of said guide/restriction member (39) and a movement restriction portion (39b) for restricting the movement of the buckle (6) toward a seating portion at the service position of the buckle (6).

20. A seat belt apparatus comprising at least a seat belt (4), a seat belt retractor (3) which is mounted on a vehicle body and always biases said seat belt (4) in the winding-up direction, a tongue (5), and a buckle (6) which is located at a position on a side of said vehicle seat (2) and to which said tongue (5) is inserted and latched,
wherein
a tongue presenter device (10) as claimed in any one of claims 1 through 14 is disposed on the side of said vehicle seat (2) on the opposite side of said buckle (6), and/or
a buckle device (30) as claimed in any one of claims 15 through 19 is attached to a vehicle set (2) or a vehicle body.
